(19) Europäisches Patentamt
European Patent Office
Office européen des brevets

(11) **EP 3 893 571 B1**

(12) **EUROPEAN PATENT SPECIFICATION**

(45) Date of publication and mention
of the grant of the patent:
**31.12.2025   Bulletin 2026/01**

(21) Application number: **19903709.4**

(22) Date of filing: **21.12.2019**

(51) International Patent Classification (IPC):
*H04L 5/00* (2006.01)          *H04W 4/70* (2018.01)
*H04B 7/0413* (2017.01)       *H04W 4/40* (2018.01)
*H04W 76/14* (2018.01)        *H04W 92/18* (2009.01)

(52) Cooperative Patent Classification (CPC):
**H04L 5/0044; H04L 5/0005; H04L 5/0053;**
**H04W 4/70;** H04B 7/0413; H04W 4/40;
H04W 76/14; H04W 92/18

(86) International application number:
**PCT/CN2019/127250**

(87) International publication number:
**WO 2020/135285 (02.07.2020 Gazette 2020/27)**

(54) **METHOD AND APPARATUS FOR DETERMINING A COMMUNICATION RESOURCE**

VERFAHREN UND VORRICHTUNG ZUR FESTLEGUNG EINER KOMMUNIKATIONSRESSOURCE

PROCÉDÉ ET APPAREIL POUR DÉTERMINER UNE RESSOURCE DE COMMUNICATION

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority:  **29.12.2018   CN 201811640506**

(43) Date of publication of application:
**13.10.2021   Bulletin 2021/41**

(73) Proprietor: **Huawei Technologies Co., Ltd.**
**Longgang District**
**Shenzhen, Guangdong 518129 (CN)**

(72) Inventor: **LI, Chao**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
**WO-A1-2018/038565     CN-A- 107 277 922**
**CN-A- 108 632 782**

- **MEDIATEK INC: "Discussion on physical layer structure for NR sidelink", 3 November 2018 (2018-11-03), pages 1 - 10, XP051478557, Retrieved from the Internet <URL:http://www.3gpp.org/ftp/tsg%5Fran/WG1%5FRL1/TSGR1%5F95/Docs/R1%2D1812364%2Ezip> [retrieved on 20181103]**
- **VIVO: "Physical layer structure for NR sidelink", 3 November 2018 (2018-11-03), pages 1 - 11, XP051478495, Retrieved from the Internet <URL:http://www.3gpp.org/ftp/tsg%5Fran/WG1%5FRL1/TSGR1%5F95/Docs/R1%2D1812306%2Ezip> [retrieved on 20181103]**
- **INTEL CORPORATION: "Sidelink Physical Structure for NR V2X Communication", 3GPP DRAFT; R1-1907906, 17 May 2019 (2019-05-17), Reno, USA, pages 1 - 21, XP051740165**
- **MEDIATEK INC: "Discussion on physical layer structure for NR sidelink", 3GPP DRAFT; R1-1812364, 16 November 2018 (2018-11-16), Spokane, US, pages 1 - 10, XP051478557**
- **VIVO: "Physical layer structure for NR sidelink", 3GPP DRAFT; R1-1812306, 16 November 2018 (2018-11-16), Spokane, USA, pages 1 - 11, XP051478495**

# Description

## TECHNICAL FIELD

This application relates to the communications field, and in particular, to a communication resource determining method and apparatus.

## BACKGROUND

Device-to-device (Device to Device, D2D) communication, vehicle-to-vehicle (Vehicle to Vehicle, V2V) communication, vehicle-to-pedestrian (Vehicle to Pedestrian, V2P) communication, or vehicle-to-infrastructure/network (Vehicle to Infrastructure/Network, V2I/N) communication is a technology for direct communication between terminal devices (terminal device). V2V, V2P, and V2I/N are collectively referred to as V2X (vehicle to everything, V2X), that is, communication between a vehicle and anything. Generally, a link for direct communication between terminal devices is referred to as a sidelink (sidelink, SL).

Currently, low-latency data transmission is required in a V2X technology researched by the 3rd generation partnership project (3rd Generation Partnership Project, 3GPP). For example, in V2X, an end-to-end transmission latency should not exceed 3 ms. Data transmission efficiency and interference of communication between terminal devices further need to be considered to implement low-latency transmission. A method is required to use a transmission resource of a sidelink in a more proper way, to improve the transmission efficiency.

MEDIATEK INC: "Discussion on physical layer structure for NR sidelink", 3GPP DRAFT; R1-1812364, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE, 3 November 2018, pages 1-10, XP051478557, and VIVO: "Physical layer structure for NR sidelink",3GPP DRAFT; R1-1812306, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE, 3 November 2018 (2018-11-03), pages 1-11, XP051478495, both disclose communication resource determining methods and apparatus.

## SUMMARY

Embodiments of this application provide a communication resource determining method and apparatus, to improve transmission efficiency. The invention is defined in the appended claims.

## BRIEF DESCRIPTION OF DRAWINGS

FIG. 1 is a schematic diagram of a communication scenario to which an embodiment of this application is applied;
FIG. 2 is a possible schematic structural diagram of a network device according to an embodiment of this application;
FIG. 3 is a possible schematic structural diagram of a terminal device according to an embodiment of this application;
FIG. 4 is a schematic signaling diagram of a method according to an embodiment of this application;
FIG. 5 is a possible schematic diagram of a frequency domain location of a first channel according to an embodiment of this application;
FIG. 6 is a possible schematic diagram of a frequency domain location of a first channel according to an embodiment of this application;
FIG. 7 is a possible schematic diagram of a frequency domain location of a first channel according to an embodiment of this application;
FIG. 8 is a possible schematic diagram of a frequency domain location of a first channel according to an embodiment of this application; and
FIG. 9 is a possible schematic diagram of a frequency domain location of a first channel according to an embodiment of this application.

## DESCRIPTION OF EMBODIMENTS

The following describes the technical solutions in the embodiments of the present invention with reference to the accompanying drawings in the embodiments of the present invention. It should be noted that the technical solutions and features in the embodiments of the present invention may be mutually combined in the case of no conflict.

In the embodiments of the present invention, "a/an" means a single individual. This does not mean that "a/an" can only be one individual and cannot be applied to another individual. For example, in the embodiments of the present invention, "one terminal device" means a particular terminal device, but does not mean that the present invention can be applied only to one particular terminal device. Terms "system" and "network" can be used interchangeably in this application.

Further, in the embodiments of the present invention, terms "and/or" and "at least one" used in cases of "A and/or B" and "at least one of A and B" include any one of three solutions, that is, a solution in which A is included but B is not included, a solution in which B is included but A is not included, and a solution in which both options A and B are included. For another example, in a case of "A, B, and/or C" and "at least one of A, B, and/or C", this phrase includes any one of six scenarios: a scenario in which A is included but both B and C are excluded, a scenario in which B is included but both A and C are excluded, a scenario in which C is included but both A and B are excluded, a scenario in which both A and B are included but C is excluded, a scenario in which both B and C are included but A is excluded, a scenario in which both A and C are included but B is excluded, and a scenario in which three options A, B, and C are included. As easily understood by a person of ordinary skill in the art and a related art, all other similar descriptions can be understood in the foregoing manner in the embodiments of the present invention.

To clearly describe the technical solutions in the embodiments of this application, words such as "first" and "second" are used in the embodiments of this application to distinguish between same items or similar items that have basically same functions and purposes. For example, a first terminal and a second terminal are merely intended to distinguish between different terminals, and are not intended to limit a sequence thereof. A person skilled in the art may understand that words such as "first" and "second" do not limit a quantity or an execution sequence, and the words such as "first" and "second" do not indicate a definite difference.

In 3GPP, an internet of vehicles (e.g. vehicle to everything, V2X) technology based on a cellular network is proposed, to interconnect vehicles by using a V2X communications system. The V2X communications system includes intelligent transportation services such as vehicle-to-vehicle (Vehicle to Vehicle, V2V) communication, vehicle-to-pedestrian (Vehicle to Pedestrian, V2P) (including a pedestrian, a cyclist, a driver, or a passenger) communication, vehicle-to-infrastructure (Vehicle to Infrastructure, V2I) communication (for example, communication between a vehicle and a roadside apparatus (e.g. road side unit, RSU)), and vehicle-to-network (Vehicle to Network, V2N) communication (for example, communication between a vehicle and a base station/-network). A sidelink is used in all of V2V/V2I/V2P data communication, , while an uplink and a downlink are used in V2N, namely, communication between a vehicle and a network. The roadside apparatus includes two types: an RSU of a terminal type, where the RSU of the terminal type is in a non-mobile state because the RSU of the terminal type is deployed on a roadside, and mobility does not need to be considered; and an RSU of a base station type, which can provide timing synchronization and resource scheduling for vehicles that communicate with the RSU.

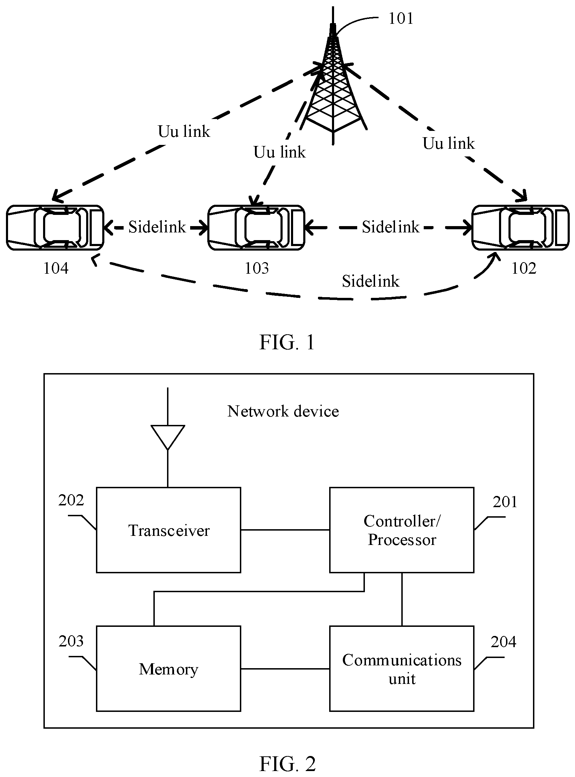

FIG. 1 is a schematic diagram of a communications system to which an embodiment of this application may be applied. The communications system includes a network device 101 and terminal devices 102 to 104. The terminal devices may separately establish a cellular link to the network device for wireless communication. The cellular link is usually referred to as a Uu link in a communications standard, and is a radio link between a terminal device and a network device, for example, a radio link between a mobile phone or a vehicle-mounted communications device and a base station. In addition, the terminal devices may directly communicate with each other through a sidelink (sidelink, SL). For example, in a possible scenario, the network device 101 may be a base station in a cellular network, and the terminal devices 102, 103, and 104 may be vehicle-mounted wireless communications devices, mobile phones, or the like. At a physical layer, a terminal device sends control information and scheduled data on a sidelink at a time. The control information is carried on a control channel and the data is carried on a data channel. For example, the control information may be a scheduling assignment (scheduling assignment, SA), the control channel may be a physical sidelink control channel (physical sidelink control channel, PSCCH), and the data channel may be a physical sidelink shared channel (physical sidelink shared channel, PSSCH). If an interval between sending of the control information and sending of the scheduled data is excessively long, reception and detection latencies of a receiver increase. if an interval between sending of the control information and sending of the scheduled data is excessively short, data transmission quality is affected. The embodiments of this application provide a communication resource determining method. Under a low-latency transmission requirement, a transmission resource of control information and a transmission resource of data scheduled by using the control information are coordinated, to ensure data transmission efficiency and reduce interference between receivers. It should be understood that the scenario shown in FIG. 1 is merely an example, and is not intended to limit the solutions of this application.

The network device in this application is an apparatus, deployed in a radio access network, configured to provide a wireless communication function for the terminal device. The network device may be a base station (Base Station, BS), for example, a macro base station, a micro base station, a relay station, or an access point, or may be a device in another form, for example, a street lamp or a roadside unit (Road Side Unit, RSU). In systems using different radio access technologies, names of a device having a network device function may be different. For example, the device is a network device or a gNodeB (gNodeB) in a fifth generation (fifth generation, 5G) new radio (new radio, NR) network. The device is referred to as an evolved NodeB (evolved NodeB, eNB or eNodeB) in a long term evolution (Long Term Evolution, LTE) network, or is referred to as a NodeB (Node B) and the like in a third generation (third generation, 3G) network, or the device is a roadside unit (road side unit, RSU) in V2X communication, or a chip or a system-on-a-chip (system on chip, SOC) inside the foregoing network device or base station. For ease of description, in this application, all the foregoing apparatuses that provide a wireless communication function for the terminal device are collectively referred to as a network device.

The terminal device in this application may include various handheld devices, vehicle-mounted devices, wearable devices, computing devices that have a wireless communication function, or other processing devices connected to a wireless modem, or units, components, apparatuses, chips, or SOCs in the foregoing devices. The terminal device may be referred to as a wireless communications device, or may be referred to as a mobile station (mobile station, MS for short), a terminal (terminal), user equipment (user equipment, UE), or the like. The terminal device may include a subscriber unit (subscriber unit), a cellular phone (cellular phone), a smartphone (smart phone), a wireless data card, a personal digital assistant (personal digital assistant, PDA) computer, a tablet computer, a modem (modem) or a modem processor (modem processor), a handheld (handheld) device, a laptop computer (laptop computer), a netbook, a cordless phone (cordless phone) or a wireless local loop (wireless local loop, WLL) station, a Bluetooth device, a machine type communication (machine type communication, MTC) terminal, and the like. For ease of description, these devices are simply referred to as a terminal device or UE in this application.

The terminal device may support one or more wireless technologies used for wireless communication, for example, 5G, LTE, WCDMA, CDMA, 1X, time division-synchronous code division multiple access (Time Division-Synchronous Code Division Multiple Access, TS-SCDMA), GSM, 802.11, and the like. The terminal device may also support different transmission services or different transmission modes on a cellular link or on a sidelink (sidelink) between terminal devices, for example, a vehicle-to-everything (vehicle to everything, V2X) service and a device-to-device (device to device, D2D) service, and may also support different technical features on a cellular link, for example, an internet of things (Internet of Things, IoT), machine type communication (machine type communication, MTC), and the like.

A plurality of terminal devices may perform a same service or different services, for example, a mobile broadband service, an enhanced mobile broadband (Enhanced Mobile Broadband, eMBB) service, and an ultra-reliable and low-latency communication (Ultra-Reliable and Low-Latency Communication, URLLC) service.

FIG. 2 may be a possible schematic structural diagram of a network device. The network device can perform the method provided in the embodiments of the present invention. The network device may include a controller or processor 201 (the following uses the processor 201 as an example for description) and a transceiver 202. The controller/processor 201 is sometimes also referred to as a modem processor (modem processor). The modem processor 201 may include a baseband processor (baseband processor, BBP) (not shown). The baseband processor processes a received digitized signal, to extract information or a data bit transmitted in the signal. Therefore, based on a requirement or an expectation, the BBP is usually implemented in one or more digital signal processors (digital signal processor, DSP) in the modem processor 201 or implemented as a separated integrated circuit (integrated circuit, IC).

The transceiver 202 may be configured to support sending and receiving information between a network device and a terminal device, and support radio communication between terminal devices. The processor 201 may be further configured to perform various functions for communication between the terminal device and another network device. On an uplink, an uplink signal from the terminal device is received by using an antenna, demodulated by the transceiver 202, and further processed by the processor 201, to restore service data and/or signaling information sent by the terminal device. On a downlink, service data and/or a signaling message are/is processed by the terminal device and modulated by the transceiver 202 to generate a downlink signal, and the downlink signal is transmitted to the terminal device by using an antenna. The network device may further include a memory 203, and the memory 203 may be configured to store program code and/or data of the network device. The transceiver 202 may include an independent receiver circuit and an independent transmitter circuit, or may be a same circuit implementing receiving and sending functions. The network device may further include a communications unit 204, and the communications unit 204 is configured to support communication between the network device 201 and another network entity. For example, the communications unit 204 is configured to support communication between the network device and a network device of a core network, and the like.

Optionally, the network device may further include a bus. The transceiver 202, the memory 203, and the communications unit 204 may be connected to the processor 201 by using the bus. For example, the bus may be a peripheral component interconnect (Peripheral Component Interconnect, PCI) bus, an extended industry standard architecture (Extended Industry Standard Architecture, EISA) bus, and or the like. The bus may include an address bus, a data bus, a control bus, and the like.

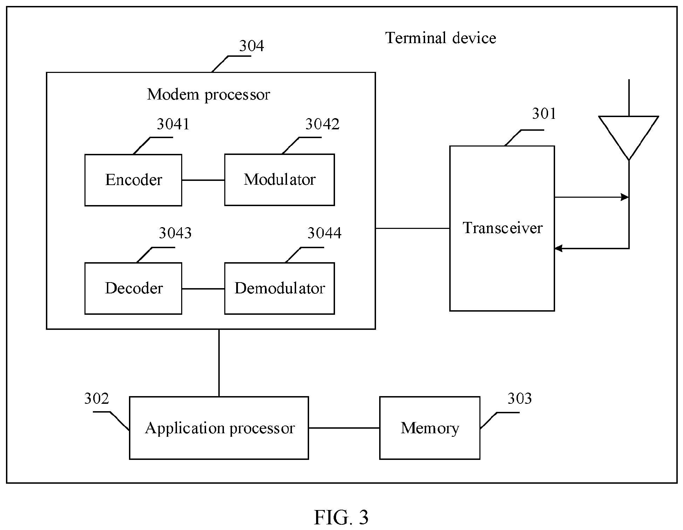

FIG. 3 is a possible schematic structural diagram of a terminal device. The terminal device can perform the method provided in the embodiments of the present invention. The terminal device may be one of the three terminal devices 102 to 104. The terminal device includes a transceiver 301, an application processor (application processor) 302, a memory 303, and a modem processor (modem processor) 304.

The transceiver 301 may adjust (for example, perform analog conversion, filtering, amplification, and up-conversion on) an output sample and generate an uplink signal. The uplink signal is transmitted to the base station in the foregoing embodiments by using an antenna. On a downlink, the antenna receives a downlink signal transmitted by a network device. The transceiver 301 may adjust (for example, perform filtering, amplification, down-conversion, and digitalization on) a signal received from the antenna and provide an input sample.

The modem processor 304 is sometimes also referred to as a controller or a processor, and may include a baseband processor (baseband processor, BBP) (not shown). The baseband processor processes a received digitized signal, to extract information or a data bit transmitted in the signal. Based on a requirement or an expectation, the BBP is usually implemented in one or more digits in the modem processor 304 or implemented as a separated integrated circuit (IC).

In a design, the modem processor (modem processor) 304 may include an encoder 3041, a modulator 3042, a decoder 3043, and a demodulator 3044. The encoder 3041 is configured to encode a to-be-sent signal. For example, the encoder 3041 may be configured to: receive service data and/or a signaling message that are/is to be sent on the uplink, and perform processing (for example, formatting, encoding, or interleaving) on the service data and the signaling message. The modulator 3042 is configured to modulate an output signal of the encoder 3041. For example, the modulator may perform processing such as symbol mapping and/or modulation on the output signal (data and/or signaling) of the encoder, and may provide an output sample. The demodulator 3044 is configured to demodulate an input signal. For example, the demodulator 3044 processes an input sample and provides symbol estimation. The decoder 3043 is configured to decode a demodulated input signal. For example, the decoder 3043 performs processing such as de-interleaving and/or decoding on the demodulated input signal, and outputs a decoded signal (data and/or signaling). The encoder 3041, the modulator 3042, the demodulator 3044, and the decoder 3043 may be implemented by the integrated modem processor 304. The units perform processing based on a radio access technology used in a radio access network.

The modem processor 304 receives, from the application processor 302, digitalized data that may represent voice, data, or control information, and processes the digitalized data for transmission. The modem processor may support one or more of a plurality of wireless communication protocols of a plurality of communications systems, for example, LTE, new radio, a universal mobile telecommunications system (Universal Mobile Telecommunications System, UMTS), and high speed packet access (High Speed Packet Access, HSPA). Optionally, the modem processor 304 may also include one or more memories.

Optionally, the modem processor 304 and the application processor 302 may be integrated in one processor chip.

The memory 303 is configured to store program code (which is sometimes referred to as a program, an instruction, software, or the like) and/or data that are/is used to support the terminal device in performing communication.

It should be noted that, the memory 203 or the memory 303 may include one or more storage units, for example, may be a storage unit that is in the processor 201 or the modem processor 304 or the application processor 302 and that is used to store program code, or may be an external storage unit independent of the processor 201 or the modem processor 304 or the application processor 302, or may be a component including a storage unit that is in the processor 201 or the modem processor 304 or the application processor 302 and an external storage unit that is independent of the processor 201 or the modem processor 304 or the application processor 302.

The processor 201 and the modem processor 304 may be processors of a same type, or may be processors of different types. For example, the processor may be implemented as a central processing unit (Central Processing Unit, CPU), a general-purpose processor, a digital signal processor (Digital Signal Processor, DSP), or an application-specific integrated circuit (Application-Specific Integrated Circuit, ASIC), a field programmable gate array (Field Programmable Gate Array, FPGA) or another programmable logic device, a transistor logic device, a hardware component, another integrated circuit, or any combination thereof. The processor 201 and the modem processor 304 may implement or execute various example logical blocks, modules, and circuits described with reference to content disclosed in the embodiments of the present invention. The processor may be a combination of components implementing a computing function, for example, a combination of one or more microprocessors, a combination of a DSP and a microprocessor, or a system-on-a-chip (system-on-a-chip, SOC).

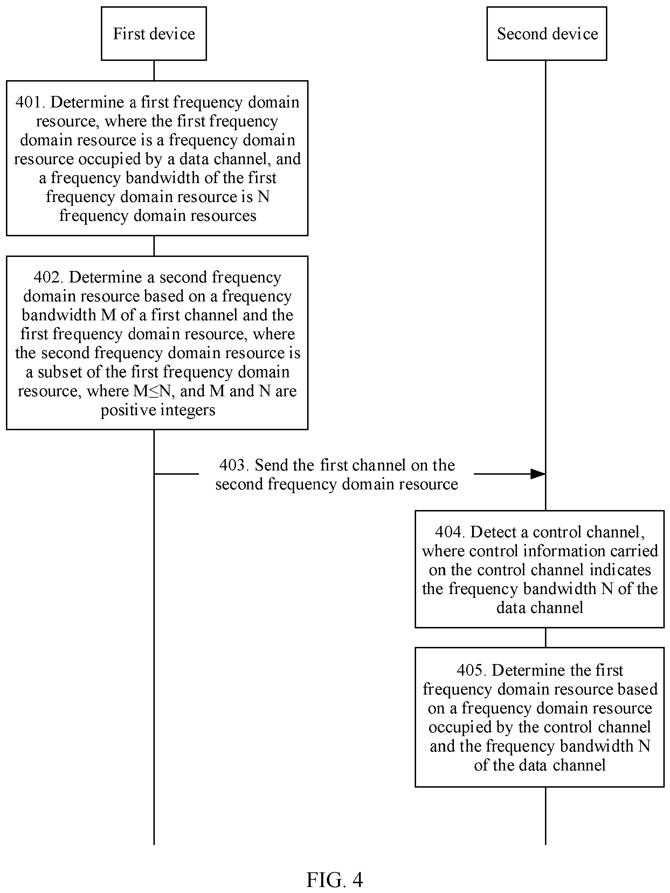

FIG. 4 is a schematic interaction diagram of a communication resource determining method 400 according to some embodiments of this application. It should be noted that some steps in FIG. 4 and the following description may be optional, and not all steps are necessarily included in the embodiments of the present invention. In addition, sequence numbers of steps are merely used for ease of description and do not represent a sequence.

Step 401. A first device determines a first frequency domain resource, where the first frequency domain resource is a frequency domain resource occupied by a data channel, and a frequency bandwidth of the first frequency domain resource is N frequency domain units.

It should be understood that the first device in this embodiment of this application may be a terminal device, or may be a network device, or may be an apparatus that is in a terminal device or a network device and that performs the method in this embodiment of this application. A second device in this embodiment of this application may be a terminal device, or may be a network device, or may be an apparatus that is in a terminal device or a network device and that performs the method in this embodiment of this application. The second device may be a receive end device. For example, when the first device sends a control channel, the second device is a device that receives the control channel. When the first device sends a feedback channel, the second device is a device that receives the feedback channel, and the feedback channel carries feedback information that is based on data sent by the second device. In addition, the second device may be more than one device. In some cases, the second device may be a group of devices. This is not limited in this application.

The first device, namely, a transmit end device, first determines the frequency domain resource (the first frequency domain resource) occupied by the data channel. The determining the first frequency domain resource includes determining a frequency bandwidth and a frequency domain location of the first frequency domain resource, namely, a specific bandwidth occupied by the data channel. The first device may determine the first frequency domain resource based on a volume of data to be sent and/or information configured by a network, or the network device configures the first frequency domain resource. For example, in a transmission mode in which a base station schedules a transmission resource, for example, in transmission using a sidelink mode 1 in NR, a first frequency domain resource used by the first device to send data is directly indicated by the base station to the first device through signaling. For another example, in a transmission mode in which the terminal device selects a sidelink transmission resource, for example, in transmission using a sidelink mode 2 in NR. the first device may detect and measure a specific resource or resource set, and select an available resource from the specific resource or resource set and determine a location and a size of the resource. For another example, in the sidelink mode 1 or the sidelink mode 2, pre-configured signaling may be used, so that a terminal device that does not receive a configuration of a base station or that is beyond coverage of a network may select an available resource from a specific resource or resource set (which may be, for example, referred to as a default resource or a default resource set). In this way, the terminal device determines a sidelink transmission resource in a scheduling-free manner.

The frequency domain unit described in this application is a scheduling unit in frequency domain. Optionally, the frequency domain unit may be a physical resource block (physical resource block, PRB), or the frequency domain unit may be a sub-channel (sub-channel). A frequency domain size of the sub-channel may be a plurality of PRBs. For example, one sub-channel may be 4, 5, 6, 8, 9, 10, 12, 15, 16, 18, 20, 25, 30, 48, 50, 72, 96, or 100 PRBs. Specifically, the frequency domain size of the sub-channel may be predefined, or may be semi-statically configured by the network device through higher layer signaling. It should be understood that, in a communications system, different channels may correspond to different sub-channel sizes. For example, a data sub-channel corresponding to the data channel is 8 PRBs, and a control sub-channel corresponding to the control channel is 4 PRBs. Optionally, in sidelink communication, a set of sub-channel sizes corresponding to the data channel and a set of sub-channel sizes corresponding to the control channel are independently configured. For example, the set of the sub-channel sizes corresponding to the data channel may be configured as {4, 5, 6, 8, 9, 10, 12, 15, 16, 18, 20, 25, 30, 48, 50, 72, 96, 100} PRBs, and the set of the sub-channel sizes corresponding to the control channel may be configured as {4, 8, 16} PRBs. Optionally, transmission at different sub-carrier spacings corresponds to different sub-channel configurations. Alternatively, optionally, sub-channel sizes in transmission at different sub-carrier spacings may be different. For example, there are sub-channel configurations in one-to-one correspondence with sub-carrier spacings of 15 kHz, 30 kHz, 60 kHz, and 120 kHz. For another example, a plurality of subcarrier spacings correspond to a same sub-channel configuration. For example, a sub-channel configuration corresponding to a 15 kHz sub-carrier spacing is the same as a sub-channel configuration corresponding to a 30 kHz sub-carrier spacing, and a sub-carrier spacing configuration corresponding to a 60 kHz sub-carrier spacing is different from a sub-carrier spacing configuration corresponding to a 120 kHz sub-carrier spacing. For another example, a larger sub-carrier spacing indicates more PRBs that are occupied by a sub-channel. Optionally, there may be different quantities of symbols for control information under conditions of different sub-carrier spacings. For example, a larger sub-carrier spacing indicates a smaller quantity of symbols occupied by the control information. It may be understood that a unit of the frequency bandwidth in the embodiments of this application is a frequency domain unit, and the foregoing description of the frequency domain unit is applicable to each example in this application. Same parts are not described again subsequently.

Optionally, the frequency bandwidth of the first frequency domain resource may be indicated by the base station. For example, the base station indicates a quantity of frequency domain units occupied by the data channel, such as 8 PRBs, 20 PRBs, or 48 PRBs. Optionally, when the frequency domain unit is a sub-channel, the terminal device may learn of, based on a configured length of the sub-channel and an indicated quantity of sub-channels, a quantity of PRBs occupied by the first frequency domain resource. For example, when a size of the sub-channel is 4 PRBs, and two sub-channels are indicated, a total of 8 PRBs are occupied. Optionally, the frequency bandwidth of the first frequency domain resource may be determined by the first device. In this case, the first device needs to select, based on usage of a resource in a shared resource or resource set by another device, interference on a current channel, and the like, an optimal resource location and resource size that can be used by the first device. For example, when there are few users or a channel is relatively idle, and the first device has a relatively large data packet to transmit, the first device may select an as large bandwidth as possible. When there are a larger quantity of users or a channel is relatively congested, the first device may select a smaller bandwidth. The selected resource may be a plurality of PRBs or sub-channels. Actually, the first device may or may not fully occupy the selected sub-channels.

An operation of this step may be implemented by the modem processor 304 in the foregoing terminal device.

The operation of this step may be implemented by the processor 201 in the foregoing network device.

Step 402. The first device determines a second frequency domain resource based on a frequency bandwidth of a first channel and the first frequency domain resource. The frequency bandwidth of the first channel is M frequency domain units. The second frequency domain resource is a subset of the first frequency domain resource. $M \leq N$, and M and N are positive integers.

It should be understood that, in this embodiment of this application, that the second frequency domain resource is the subset of the first frequency domain resource means that, in frequency domain, the second frequency domain resource is completely the same as the first frequency domain resource, or the second frequency domain resource is a part of the first frequency domain resource. The first channel may be a control channel. When the control channel and the data channel are sent together, control information carried on the control channel may include resource information of data. Optionally, the control information may further include feedback information. The resource information of the data is information required by a receiving device to receive the data. For example, in a V2X system, the control channel may be a physical sidelink control channel (physical sidelink control channel, PSCCH), and sidelink control information (sidelink control information, SCI) carried on the PSCCH is sometimes referred to as a scheduling assignment (scheduling assignment, SA). Information included in the SCI is usually indication information that is necessary when a receiver receives data associated with the SCI, for example, a modulation and coding scheme, indication information of a time domain slot or symbol of data, frequency domain location and size information of data, or indication information indicating whether to retransmit the data. Alternatively, the first channel may be a feedback channel. The feedback channel carries feedback information. For example, the feedback information may include hybrid automatic repeat request (Hybrid Automatic Repeat reQuest, HARQ) acknowledgment information used to indicate whether a receiver correctly demodulates data, and channel state information CSI (Channel State Information). The CSI includes an indication of channel quality, an indication of a parameter related to multiple-input multiple-output (Multiple-Input Multiple-Output, MIMO) transmission, and the like. For example, in the V2X system, the feedback channel may be a physical sidelink feedback channel (physical sidelink feedback channel PSFCH). The PSFCH carries feedback information that is on a sidelink. It should be understood that when the method 400 is applied to another communications system, the control channel and the feedback channel may also be another specific control channel and another specific feedback channel.

Specifically, the frequency bandwidth M of the first channel may be predefined or may be determined by the first device based on signaling. For example, the frequency bandwidth M of the first channel may be predefined. In a standard, a frequency bandwidth of the control channel is defined as M PRBs, where M may be set to 4, or may be set to 6 or 8. When a pre-defined or protocol-defined mode is used, all devices send or receive the first channel based on a same fixed value once the frequency bandwidth M is determined.

Optionally, the frequency bandwidth M of the first channel may be determined by the first device based on signaling. For example, when the first device does not send data on a symbol other than symbols occupied by the first channel, to reduce a waste of system resources caused in this case, a quantity of symbols of the first channel may be smaller, and a bandwidth of the first channel may be larger, for example, 8 PRBs. When the first device needs to send data on a symbol in addition to symbols occupied by the first channel, a waste of system resources is not caused in this case, a quantity of symbols of the first channel may be slightly larger, and a bandwidth of the first channel may be smaller, for example, 4 PRBs. In this case, a value to be used is determined by using other parameters configured in the system. For example, the first device determines the value based on factors such as whether an antenna port of the first channel is the same as that of the data channel, and whether a MIMO transmission mode of the first channel is the same as that of the data channel.

Specifically, the first device may determine the second frequency domain resource based on the frequency bandwidth M of the first channel and the first frequency domain resource. The first frequency domain resource includes the frequency bandwidth N of the first frequency domain resource and the frequency domain location of the first frequency domain resource. The second frequency domain resource is a frequency domain resource occupied by the first channel. The first device may determine a frequency domain location of the first channel relative to the data channel based on the frequency bandwidth M of the first channel and a frequency bandwidth N of the data channel (that is, the frequency bandwidth N of the first frequency domain resource). Because the frequency domain location of the data channel is known in this case, the first device may further determine the frequency domain resource (that is, the second frequency domain resource) occupied by the first channel.

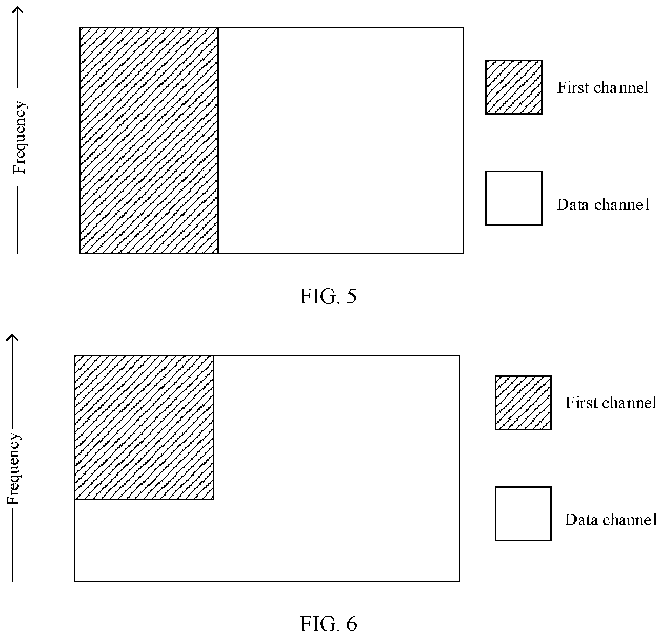

That the second frequency domain resource is determined based on the frequency bandwidth M of the first channel and the first frequency domain resource includes: When M = N, as shown in FIG. 5, the second frequency domain resource and the first frequency domain resource occupy a same frequency domain location, that is, the second frequency domain resource is the same as the first frequency domain resource, or a boundary of the second frequency domain resource is located within a boundary of the first frequency domain resource when M < N.

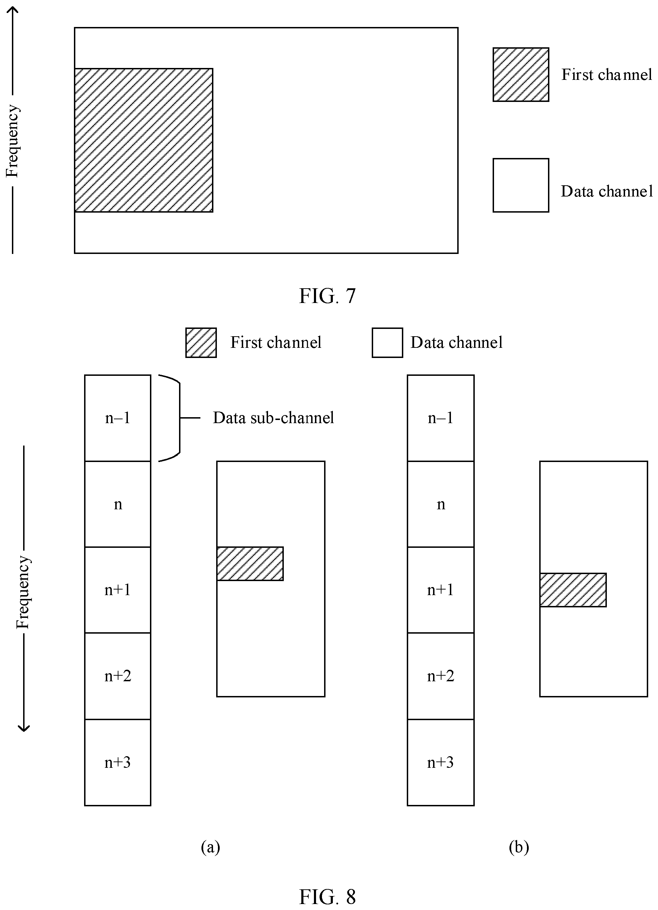

In some embodiments, specifically, that a boundary of the second frequency domain resource is located within a boundary of the first frequency domain resource may include two implementations. Implementation 1: A frequency domain start point of the second frequency domain resource coincides with a frequency domain start point of the first frequency domain resource, or a frequency domain end point of the second frequency domain resource coincides with a frequency domain end point of the first frequency domain resource. That is, in the implementation 1, a side of the second frequency domain resource is aligned with a side of the first frequency domain resource. For example, as shown in FIG. 6, a frequency domain end point of the first channel coincides with a frequency domain end point of the data channel. Implementation 2: The second frequency domain resource should be located in a middle part of the first frequency domain resource as much as possible. For example, as shown in FIG. 7, in a possible case, a frequency bandwidth from the frequency domain start point of the second frequency domain resource to the frequency domain start point of the first frequency domain resource is $\left\lfloor (N-M)/2 \right\rfloor$ or $\left\lceil (N-M)/2 \right\rceil$, where $\lfloor \ \rfloor$ indicates rounding down, and $\lceil \ \rceil$ indicates rounding up. Alternatively, a frequency bandwidth from the frequency domain end point of the second frequency domain resource to the frequency domain end point of the first frequency domain resource is $\left\lfloor (N-M)/2 \right\rfloor$ or $\left\lceil (N-M)/2 \right\rceil$. For example, when N is 8 and M is 4, the frequency domain start point of the second frequency domain resource is two frequency domain units away from the frequency domain start point of the first frequency domain resource, the frequency domain end point of the second frequency domain resource is also two frequency domain units away from the frequency domain end point of the first frequency domain resource, and the second frequency domain resource is located in the middle of the first frequency domain resource. In the implementation 1, a side of the frequency domain resource occupied by the first channel is aligned with a side of the frequency domain resource occupied by the data channel. A resource location shown in FIG. 6 is used as an example. A part, of the data channel, located right below the first channel and occupying a same time domain location as the first channel has continuous frequency domain resources. Therefore, the part, of the data channel, frequency-division multiplexed with the first channel may have sufficient space for placing a demodulation reference signal (demodulation reference signal, DMRS). When the first channel and the data channel are hybrid multiplexed, performance of demodulating data by using the DMRS on the data channel can be improved, and transmission efficiency can be improved. In the implementation 2, the frequency domain resource occupied by the first channel is located in the middle part of the frequency domain resource of the data channel, and a distance between a frequency domain resource occupied by the first channel of the first device and a frequency domain resource occupied by a first channel of another device is evenly increased. For example, when the first channel is a control channel, a distance between a frequency domain resource occupied by the control channel of the first device and a frequency domain resource occupied by a control channel of another device is increased, so that in-band emission (in-band emission, IBE) interference, generated by a data or control channel sent by the another device, to the control channel sent by the first device can be reduced.

Optionally, in some embodiments, the second frequency domain resource meets either of the implementation 1 and the implementation 2 when M < N.

Optionally, in some embodiments, when M < N, the first device further determines, based on a threshold, an implementation that the second frequency domain resource meets. Specifically, when the frequency bandwidth N of the first frequency domain resource is less than a threshold W, that is, when M < N < W, the second frequency domain resource is determined to meet the implementation 1, where W is a positive integer, and W > M. In this case, a difference between the frequency bandwidth of the data channel and the frequency bandwidth of the first channel is in a relatively small range, and in the implementation, 1, the part, of the data channel, located right below the first channel and occupying the same time domain location as the first channel may have continuous frequency domain resources. Therefore, the part, of the data channel, frequency-division multiplexed with the first channel may have sufficient resources for placing a demodulation reference signal (demodulation reference signal, DMRS). This can improve performance of demodulating data by using the DMRS on the data channel and improve transmission efficiency. When the frequency bandwidth N of the first frequency domain resource is greater than or equal to the threshold W, that is, when N ≥ W, the second frequency domain resource is determined to meet the implementation 2. In this case, a difference between the frequency bandwidth of the data channel and the frequency bandwidth of the first channel is relatively large, and in the implementation 2, the frequency domain resource occupied by the first channel may be located in the middle part of the frequency domain resource of the data channel. In this case, the data channel is located above and below the first channel, and both parts that occupy a same time domain location as the first channel have sufficient resources for placing a demodulation reference signal (demodulation reference signal, DMRS). This can improve performance of demodulating data by using the DMRS on the data channel, and improve transmission efficiency. In addition, a distance between a frequency domain occupied by the first channel of the first device and a frequency domain occupied by a first channel of another device is increased in the implementation 2. This can reduce in-band emission IBE interference generated by a data or control channel sent by the another device. It should be understood that a unit of the threshold W is the same as the unit of the frequency bandwidth, and details are not described herein again. A value of the threshold W may be predefined, or may be configured by the network device or another terminal device by using signaling. The threshold W may be set based on the frequency bandwidth of the control channel and the frequency bandwidth of the data channel. In these embodiments, the first device determines the second frequency domain resource based on the frequency bandwidth of the first channel and the first frequency domain resource. Frequency domain locations that are of the second frequency domain resource determined in cases of different frequency bandwidths and that are relative to a frequency domain location of the first frequency domain resource are different. In addition, the second frequency domain resource is the subset of the first frequency domain resource. In this way, the first device can more properly coordinate the frequency domain resource occupied by the first channel and the frequency domain resource occupied by the data channel, so that the first channel and the data channel can be multiplexed in an optimal manner in different cases. This improves performance of demodulating data and data transmission efficiency in a system, and reduces in-band emission IBE interference between different devices.

Optionally, in some embodiments, there may be another threshold W'. When W' < N < W, the second frequency domain resource is determined to meet the implementation 1; when N ≥ W, the second frequency domain resource is determined to meet the implementation 2. W' is a positive integer greater than or equal to M.

It should be understood that the examples in FIG. 6 to FIG. 8 are merely intended to describe a relationship between the frequency domain resource (the second frequency domain resource) occupied by the first channel and the frequency domain resource (the first frequency domain resource) occupied by the data channel, and do not impose a limitation on a relationship between a time domain resource occupied by the first channel and a time domain resource occupied by the data channel. In some cases, the first channel may occupy the first several time domain symbols, the middle several symbols, or the last several symbols of the time domain resource occupied by the data channel. A specific quantity of symbols may be determined by the first device based on a data volume of the control information, or may be indicated by the network device or another terminal device by using signaling, or may be predefined.

Optionally, in some embodiments, that a boundary of the second frequency domain resource is located within a boundary of the first frequency domain resource when M < N includes: When M < N, it is determined that the frequency domain start point of the second frequency domain resource coincides with a frequency domain start point of a first data sub-channel, or a frequency domain center of the second frequency domain resource coincides with a frequency domain center of a first data sub-channel, where the first data sub-channel is a middle data sub-channel in at least one data sub-channel occupied by the first frequency domain resource. Optionally, when a quantity of sub-channels occupied by the first frequency domain resource is an even number, the middle data sub-channel is a sub-channel closest to a center. When the quantity of sub-channels occupied by the first frequency domain resource is an odd number, the middle data sub-channel is the sub-channel right in the middle. For example, when there are an even quantity T of sub-channels, the middle sub-channel may be represented as $floor(T/2)$ or $(floor(T/2)+1)$. For another example, when there are an odd quantity T of sub-channels, the middle sub-channel may be represented as $(floor(T/2)+1)$. For example, when T = 3, the middle sub-channel that is calculated in the foregoing manner is the second sub-channel. For example, when T = 6, the middle sub-channel is the third or fourth sub-channel. In the foregoing example, $floor()$ indicates rounding down. As shown in FIG. 8, n-1 to n+3 are numbers of data sub-channels. As described above, a frequency bandwidth of a data sub-channel may be a frequency bandwidth of an integer quantity of PRBs. In these embodiments, the second frequency domain resource is determined based on a scale of the data sub-channel. FIG. 8 is used as an example. The data channel occupies three data sub-channels, namely, n, n+1, and n+2. The data channel does not fully occupy the data sub-channel numbered n+2. In this case, the data sub-channel numbered n+1 is the middle data sub-channel in the at least one data sub-channel occupied by the first frequency domain resource, namely, the first data sub-channel. It is determined that the frequency domain start point of the second frequency domain resource coincides with a frequency domain start point of the data sub-channel numbered n+1, as shown in (a) in FIG. 8; or it is determined that the frequency domain center of the second frequency domain resource coincides with a frequency domain center of the data sub-channel numbered n+1, as shown in (b) in FIG. 8. It should be understood that the data sub-channel is a sub-channel divided for a data channel. Division into sub-channels helps reduce channel fragmentation when the first device selects a transmission resource. This improves efficiency of the entire system. For example, based on a service model supported by the system, system resources can be divided into sub-channels that occupy specific quantities of PRBs. When selecting a resource, the first device needs to occupy an integer quantity of sub-channels. In this way, the first device can always find a transmission resource corresponding to a sub-channel of a specific size as long as the system still has an available resource. Further, a resource is selected in sub-channels, so that control signaling overheads can be reduced.

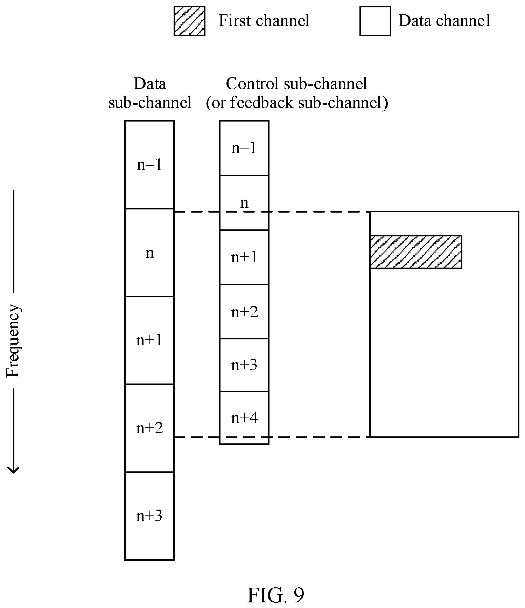

Optionally, in some embodiments, a sub-channel width corresponding to the data channel, a sub-channel width corresponding to the control channel, and a sub-channel width corresponding to the feedback channel are independently configured, and sizes of the sub-channel widths may be the same or different. For example, a size of a data sub-channel is greater than a size of a feedback sub-channel and a size of a control sub-channel. In this case, that a boundary of the second frequency domain resource is located within a boundary of the first frequency domain resource when M < N includes: When M < N, it is determined that the frequency domain start point of the second frequency domain resource coincides with a frequency domain start point of a first control sub-channel (or a first feedback sub-channel), or the frequency domain center of the second frequency domain resource coincides with a frequency domain center of the first control sub-channel (or the first feedback sub-channel), where the first control sub-channel (or the first feedback sub-channel) is one of control sub-channels (or feedback sub-channels) that are in at least one control sub-channel (or feedback sub-channel) occupied by the first frequency domain resource and that completely overlap with or that are contained in at least one data sub-channel occupied by the first frequency domain resource. As shown in FIG. 9, the data channel occupies three data sub-channels numbered n, n+1, and n+2, and the data channel occupies five control sub-channels (or feedback sub-channels) numbered from n to n+4. It can be learned from the figure that, in these data sub-channels and control sub-channels (or feedback sub-channels), a frequency domain range of the data sub-channel numbered n completely covers the control sub-channel (or feedback sub-channel) numbered n+1. In this case, the control sub-channel (or feedback sub-channel) numbered n+1 is the first control sub-channel (or the first feedback sub-channel), and it is determined that the frequency domain start point of the second frequency domain resource coincides with the frequency domain start point of the first control sub-channel (or the first feedback sub-channel), or the frequency domain center of the second frequency domain resource coincides with the frequency domain center of the first control sub-channel (or the first feedback sub-channel). In this case, IBE interference caused by data or control information sent by another device to control information transmitted on the second frequency domain resource can be reduced.

Optionally, in some embodiments, that the second frequency domain resource is determined based on a frequency bandwidth of a first channel and the first frequency domain resource includes: determining the second frequency domain resource based on the frequency bandwidth M of the first channel, the frequency bandwidth N of the data channel, and a first parameter. The first parameter may be one parameter, or the first parameter may include a plurality of parameters. This is not limited herein.

In some embodiments, the first parameter includes an identifier related to a transmission link, and the transmission link herein is a link between the first device and the second device. Specifically, the identifier related to the transmission link may be an identifier of the first device, an identifier of the second device, a joint identifier of the first device and the second device, a radio network temporary identifier (radio network temporary identifier, RNTI) used when the network device schedules the first device, an RNTI used when the network device schedules the second device, or a HARQ process number used by the first device and the second device.

Optionally, the first parameter may further include a subcarrier spacing. The subcarrier spacing may be predefined, may be configured by the network device by using a parameter related to a transmission resource, or may be pre-configured in the terminal device. This is not limited in the present invention.

Optionally, the first parameter may further include a transmission mode in which the first device sends first data, and the transmission mode may be unicast, multicast, or broadcast. It should be understood that the first data is data carried on a data channel that is sent in the same sending occasion with the first channel at a physical layer.

Optionally, when the first channel is a feedback channel, the feedback channel carries feedback information for second data sent by the second device. The method further includes: receiving second control information and the second data from the second device, where the second control information indicates a frequency domain resource occupied by the second data. Optionally, the second control information includes indication information of a feedback resource. In this case, the first parameter may include at least one of the following parameters: 1. Geographical location information of the first device, where for example, the geographical location information may be an identifier or location information of a zone (zone) to which the first device belongs; 2. Scheduling information of a sidelink resource, where specifically, the scheduling information is scheduling information of a link resource between the first device and the second device; 3. A frequency domain resource occupied by the second data; 4. A frequency domain resource occupied by the second control information; 5. Indication information that is of the feedback resource and that is sent by the second device, where for example, a field in the second control information explicitly or implicitly indicates the feedback resource; and 6. A quantity of retransmissions of the second data, where the quantity of retransmissions may be indicated by the second control information. For detailed content of the foregoing parameters, refer to the description in the following method 600. Details are not described herein.

It should be understood that the first parameter may be one of the foregoing parameters, or the first parameter may include at least two of the foregoing parameters. A specific description of determining the second frequency domain resource based on the first parameter, the frequency bandwidth M of the first channel, and the frequency bandwidth N of the data channel is as follows, and details are not described herein.

An operation of this step may be implemented by the modem processor 304 in the foregoing terminal device.

The operation of this step may also be implemented by the processor 201 in the foregoing network device.

Step 403. The first device sends the first channel on the second frequency domain resource. Optionally, the first device sends the data channel on the first frequency domain resource at the same time. Optionally, the first device may not send the data channel on the first frequency domain resource at the same time. This is because whether to send the data channel is not determined based on whether the first channel exists, but based on whether an upper-layer data packet arrives. In addition, whether the control information is sent on the first channel is determined by a current transmission requirement. For example, if feedback information needs to be sent currently, the feedback information needs to be sent in a timely manner even if there is no data channel. Otherwise, a system latency is affected. For another example, if the first device selects or is ready to occupy some resources, the first device possibly separately sends control information on the first channel even if there is no data to be sent, so that a receiver adjusts receiving and sending resources based on the control information. Further, if the data channel and the first channel appear in a same slot, an optimal policy is to send the data channel and the first channel together. This is because system overheads, on an automatic gain control (automatic gain control, AGC) symbol and a receive/transmit conversion symbol, generated when the first channel is separately sent can be reduced in this way.

An operation of this step may be implemented by the transceiver 301 in the foregoing terminal device. Certainly, the operation of this step may also be implemented by the modem processor 304 in the foregoing terminal device by controlling the transceiver 301.

The operation of this step may be implemented by the transceiver 202 in the foregoing network device. Certainly, the operation of this step may also be implemented by the processor 201 in the foregoing network device by controlling the transceiver 202.

Step 404. The second device detects a control channel, where a frequency domain resource occupied by the control channel is a third frequency domain resource, and a frequency bandwidth of the third frequency domain resource is G frequency domain resources. Control information carried on the control channel indicates the frequency bandwidth of the data channel. The frequency bandwidth of the data channel is N frequency domain units. $G \leq N$, and G and N are positive integers.

It should be understood that, for brevity of description, based on different meanings of the first channel in step 401 to step 403, the second frequency domain resource indicates a frequency domain resource that needs to be occupied for sending a control channel or a frequency domain resource that needs to be occupied for sending a feedback channel. However, for the second device that needs to receive a control channel and/or a feedback channel, in particular, for the second device that needs to receive both a control channel and a feedback channel, the control channel needs to be first received, and then the feedback channel is received based on the control channel. Therefore, when an action of the second device is described, the third frequency domain resource needs to be introduced for indicating the frequency domain resource occupied by the control channel, and a fourth frequency domain resource needs to be introduced for indicating a frequency domain resource occupied by the feedback channel. It may be understood that, in an interaction between devices using a same method, a frequency domain resource that needs to be occupied by a control channel and that is determined by the first device is the same as a frequency domain resource that is occupied by a control channel and detected by the second device. This description is also applicable to the feedback channel. Similarly, the frequency bandwidth G and a frequency bandwidth K are introduced on a second device side to distinguish between the control channel and the feedback channel.

An operation of this step may be implemented by the transceiver 301 in the foregoing terminal device. Certainly, the operation of this step may also be implemented by the modem processor 304 in the foregoing terminal device by controlling the transceiver 301.

The operation of this step may be implemented by the transceiver 202 in the foregoing network device. Certainly, the operation of this step may also be implemented by the processor 201 in the foregoing network device by controlling the transceiver 202.

Step 405. The second device determines a first frequency domain resource based on the third frequency domain resource and the frequency bandwidth N of the data channel. It should be understood that the first frequency domain resource is consistent with that in the foregoing description, and indicates the frequency domain resource occupied by the data channel. After knowing the frequency bandwidth and a frequency domain location of the third frequency domain resource, the second device determines the first frequency domain resource based on the frequency domain location of the third frequency domain resource relative to the first frequency domain resource. A method for determining the frequency domain location of the third frequency domain resource (the frequency domain resource occupied by the control channel) relative to the first frequency domain resource is consistent with the method for determining the relative location by the first device.

That the first frequency domain resource is determined based on the third frequency domain resource and the frequency bandwidth N of the data channel includes: When G = N, the third frequency domain resource and the first frequency domain resource occupy a same frequency domain location, that is, the third frequency domain resource is the same as the first frequency domain resource; or when G < N, a boundary of the third frequency domain resource is located within a boundary of first frequency domain resource.

In some embodiments, specifically, that a boundary of the third frequency domain resource is located within a boundary of the first frequency domain resource may include two implementations. Implementation 1: A frequency domain start point of the third frequency domain resource coincides with a frequency domain start point of the first frequency domain resource, or a frequency domain end point of the third frequency domain resource coincides with a frequency domain end point of the first frequency domain resource. That is, in the implementation 1, a side of the third frequency domain resource is aligned with a side of the first frequency domain resource. For example, as shown in FIG. 6, a frequency domain end point of the control channel coincides with a frequency domain end point of the data channel. Implementation 2: The third frequency domain resource should be located in a middle part of the first frequency resource as much as possible. For example, as shown in FIG. 7, in a possible case, a frequency bandwidth from the frequency domain start point of the third frequency domain resource to the frequency domain start point of the first frequency domain resource is

$$\left\lfloor (N-G)/2 \right\rfloor \text{ or } \left\lceil (N-G)/2 \right\rceil,$$

where $\lfloor \rfloor$ indicates rounding down, and $\lceil \rceil$ indicates rounding up. Alternatively, a frequency bandwidth from the frequency domain end point of the third frequency domain resource to the frequency domain end point of the first frequency domain resource is $\left\lfloor (N-G)/2 \right\rfloor$ or

$\left\lceil (N-G)/2 \right\rceil$. For example, when N is 8 and G is 4, the frequency domain start point of the third frequency domain resource is two frequency domain units away from the frequency domain start point of the first frequency domain resource, the frequency domain end point of the third frequency domain resource is also two frequency domain units away from the frequency domain end point of the first frequency domain resource, and the third frequency domain resource is located in the middle of the first frequency domain resource. In the implementation 1, a side of the frequency domain resource occupied by the control channel is aligned with a side of the frequency domain resource occupied by the data channel. In the implementation 2, the frequency domain resource occupied by the control channel is located in the middle part of the frequency domain resource of the data channel.

Optionally, in some embodiments, the third frequency domain resource meets either of the implementation 1 and the implementation 2 when G < N.

Optionally, in some embodiments, when G < N, the first device further determines, based on a threshold, an implementation that the third frequency domain resource meets. Specifically, when the frequency bandwidth N of the first frequency domain resource is less than a threshold W, that is, when G < N < W, the third frequency domain resource is determined to meet the implementation 1, where W is a positive integer, and W > M. When the frequency bandwidth N of the first frequency domain resource is greater than or equal to the threshold W, that is, when N ≥ W, the third frequency domain resource is determined to meet the implementation 2. It should be understood that a unit of the threshold W is the same as the unit of the frequency bandwidth, and details are not described herein again. A value of the threshold W may be predefined, or may be configured by a network device or another terminal device by using signaling. In these embodiments, the first device determines the third frequency domain resource based on the frequency bandwidth of the first channel and the first frequency domain resource. Frequency domain locations that are of the third frequency domain resource determined in cases of different frequency bandwidths and that are relative to a frequency domain location of the first frequency domain resource are different. In addition, the third frequency domain resource is the subset of the first frequency domain resource. In this way, the first device can more properly coordinate the frequency domain resource occupied by the first channel and the frequency domain resource occupied by the data channel, so that the first channel and the data channel can be multiplexed in an optimal manner in different cases. This improves performance of demodulating data and data transmission efficiency in a system, and reduces in-band emission IBE interference between different devices.

Optionally, in some embodiments, there may be another threshold W'. When W' < N < W, the third frequency domain resource is determined to meet the implementation 1; when N ≥ W, the third frequency domain resource is determined to meet the implementation 2. W' is a positive integer greater than or equal to M.

An operation of this step may be implemented by the modem processor 304 in the foregoing terminal device.

The operation of this step may be implemented by the processor 201 in the foregoing network device.

Step 406. The second device detects the data channel on the first frequency domain resource.

Optionally, in some embodiments, the control information further indicates a frequency bandwidth of the feedback channel, and the frequency bandwidth of the feedback channel is K frequency domain units. The method 400 may further include: determining the fourth frequency domain resource based on K and the first frequency domain resource; and detecting, by the second device, the feedback channel on the fourth frequency domain resource. It should be understood that the method for determining a frequency domain location of the fourth frequency domain resource (the frequency domain resource occupied by the feedback channel) relative to the first frequency domain resource is consistent with the method for determining the relative location by the first device. In other words, the method for determining the fourth frequency domain resource is the same as the foregoing method for determining the third frequency domain resource. Details are not described herein again.

It should be understood that in the method 400, only the frequency domain resource occupied by the first channel is limited. In an actual sending process, the first device further needs time domain resource information of the first channel. The time domain resource information may be predefined in a standard, may be indicated by the network device or another terminal device by using signaling, or may be obtained by using a combination of the foregoing two manners. For example, a quantity of time domain symbols occupied by the first channel is predefined, and a time domain location of the first channel relative to the data channel is indicated by using signaling.

In some embodiments, a time domain start point of the first channel coincides with a time domain start point of the data channel, a time domain end point of the first channel coincides with a time domain end point of the data channel, or a time domain boundary of the first channel is located within a time domain boundary of the data channel. In other words, the second frequency domain resource is a subset of the first frequency domain resource. In this case, a time-frequency resource occupied by the first channel is within a boundary range of a time-frequency resource occupied by the data channel. The first channel and the data channel may be multiplexed on both a time resource and a frequency domain resource.

In some embodiments, a time domain end point of the first channel coincides with a time domain start point of the data channel, a time domain start point of the first channel coincides with a time domain end point of the data channel, or a time-frequency resource occupied by the first channel and a time-frequency resource occupied by the data channel do not overlap in time domain. In other words, in this case, the first channel and the data channel are completely time-division multiplexed. In these embodiments, an antenna port of the first channel is different from an antenna port of the data channel, a MIMO mode of the first channel is different from a MIMO mode of the data channel, or a quasi co-location (quasi-colocation, QCL) parameter of the first channel is different from a quasi co-location parameter of the data channel.

An operation of this step may be implemented by the transceiver 301 in the foregoing terminal device. Certainly, the operation of this step may also be implemented by the modem processor 304 in the foregoing terminal device by controlling the transceiver 301.

The operation of this step may be implemented by the transceiver 202 in the foregoing network device. Certainly, the operation of this step may also be implemented by the processor 201 in the foregoing network device by controlling the transceiver 202.

Optionally, before step 403, the method 400 further includes: performing rate matching or puncturing on the data channel on the second frequency domain resource. When the first channel and the data channel are sent in a same slot, because the first channel and the data channel are sent by a same device, a resource of the first channel is dedicated to the first channel. In this case, the data channel cannot occupy the second frequency domain resource on which the first channel is located. Therefore, when resource mapping is performed on the data channel, time-frequency resources occupied by the first channel need to be removed. Correspondingly, when sending the data channel, the first device needs to bypass the second frequency domain resource, and a bypass manner is to perform rate matching on data carried on the data channel or puncture the data channel. In this way, the data on the data channel can be correctly mapped, and the receiver can perform correct demodulation and correct coding accordingly.

The operation may be implemented by the transceiver 301 in the foregoing terminal device. Certainly, the operation may also be implemented by the modem processor 304 in the foregoing terminal device by controlling the transceiver 301.

The operation may be implemented by the transceiver 202 in the foregoing network device. Certainly, the operation may also be implemented by the processor 201 in the foregoing network device by controlling the transceiver 202.

According to the communication resource determining method provided in this embodiment of this application, a frequency domain resource of control information and a frequency domain resource of data scheduled by using the control information may be coordinated. The first device determines the second frequency domain resource based on the frequency bandwidth of the first channel and the first frequency domain resource. Frequency domain locations that are of the second frequency domain resource determined in cases of different frequency bandwidths and that are relative to a frequency domain location of the first frequency domain resource are different. In addition, the second frequency domain resource is a subset of the first frequency domain resource. In this way, the first device can more properly coordinate the frequency domain resource occupied by the first channel and the frequency domain resource occupied by the data channel, so that the first channel and the data channel can be multiplexed in an optimal manner in different cases. This improves data transmission efficiency in a system, and reduces in-band emission IBE interference between different devices.

An embodiment of this application further provides another communication resource determining method 500. In the method 500, a first device may determine a time domain relationship between a control channel and a data channel. In other words, the first device may determine a time-frequency overlapping relationship between the data channel and the control channel on a time domain symbol on which the control channel is located. It should be understood that the method 500 may be a part of the method 400, or the method 500 may be an independent method. In other words, the method 500 may be combined with the foregoing method 400 to determine a time-frequency resource of a control channel, or the method 500 may be combined with another method for determining a frequency domain resource of a control channel to determine a time-frequency resource of the control channel. That is, the method 500 limits only a time domain resource of the control channel. The following describes the method 500 in detail.

Step 501. The first device determines a first time domain resource, where the first time domain resource is a time domain resource occupied by the data channel. For descriptions of the first device and the data channel, refer to the foregoing descriptions. Details are not described herein again. The time domain resource occupied by the data channel includes a quantity of slots occupied by the time domain resource, a start location of the time domain resource in the slots, and a quantity of symbols occupied by the time domain resource in the slots. The information may be indicated by using control information.

The first device in this embodiment of this application may be a terminal device, or may be a network device, or may be an apparatus that is in a terminal device or a network device and that performs the method in this embodiment of this application. A second device in this embodiment of this application may be a terminal device, or may be a network device, or may be an apparatus that is in a terminal device or a network device and that performs the method in this embodiment of this application. The second device is a receive end device. For example, when the first device sends the control channel, the second device is a device that receives the control channel. When the first device sends a feedback channel, the second device is a device that receives the feedback channel, and the feedback channel carries feedback information that is based on data sent by the second device. In addition, the second device may be more than one device. In some cases, the second device may be a group of devices. This is not limited in this application.

It should be understood that both a symbol (symbol) and a slot (Slot) described in this embodiment of this application are granularities of the time domain resource, and one slot may include a plurality of symbols. For example, in LTE, one slot includes seven symbols, and in NR, one slot includes 14 symbols.

An operation of this step may be implemented by the modem processor 304 in the foregoing terminal device.

The operation of this step may be implemented by the processor 201 in the foregoing network device.

Step 502. The first device determines a second time domain resource based on a transmit parameter of the control channel and a transmit parameter of the data channel.

It should be understood that the second time domain resource is a time domain resource that needs to be occupied for sending the control channel. Specifically, the transmit parameter may include at least one of the following parameters: an antenna port number, a multiple-input multiple-output MIMO transmission mode, or quasi co-location QCL indication information. Optionally, the MIMO transmission mode is one of the following modes: beamforming, spatial multiplexing, or transmit diversity (transmit diversity). The transmit diversity includes: space time block coding (space time block coding, STBC), space frequency block coding (space frequency block coding, SFBC), and cyclic delay diversity (Cyclic Delay Diversity, CDD).

In some embodiments, that the second time domain resource is determined based on the transmit parameter of the control channel and the transmit parameter of the data channel includes: When the transmit parameter of the control channel is the same as the transmit parameter of the data channel, a time domain start point of the control channel coincides with a time domain start point of the data channel, a time domain end point of the control channel coincides with a time domain end point of the data channel, or a time domain boundary of the control channel is located within a time domain boundary of the data channel. In this case, the time domain resource occupied by the control channel is located within a boundary range of the time domain resource occupied by the data channel. In other words, the control channel and the data channel are multiplexed on a time resource. That is, the control channel and the data channel are frequency-division multiplexed on a symbol on which the control channel is located. When the transmit parameter of the control channel is different from the transmit parameter of the data channel, the time domain end point of the control channel coincides with the time domain start point of the data channel, the time domain start point of the control channel coincides with the time domain end point of the data channel, or a time-frequency resource occupied by the control channel and a time-frequency resource occupied by the data channel do not overlap in time domain. That is, in this case, the control channel and the data channel are completely time-division multiplexed.

When the transmit parameter of the control channel is the same as the transmit parameter of the data channel, the control channel and the data channel use a same antenna port, a same MIMO transmission mode, or same QCL indication information for transmission, and the first device may still send data on other frequency domain resources than a frequency domain resource occupied by the control information that are on time domain symbols occupied by the control channel, thereby reducing a waste of system resources. This is because it is difficult for a device, especially a terminal device, to simultaneously send signals in two different MIMO modes or in different beam directions on one slot symbol. The QCL indication information may be usually used to describe whether MIMO modes or beam directions are the same.

In some cases, the transmit parameter of the control channel is different from the transmit parameter of the data channel. For example, antenna ports, MIMO transmission modes, or QCL indication information are/is different. For example, in transmission on a high frequency that is above 6 GHz, a transmission mode of the control channel may be omnidirectional or there may be a relatively wide transmission range in a transmission mode of the control channel; and a narrowband pointing to a specific user may be used in a transmission mode of the data channel. The control channel and the data channel need to be transmitted by using different antennas. Therefore, an antenna port, a MIMO transmission mode, or QCL information of the control channel is different from that of the data channel. This is because it is difficult for a device, especially a terminal device, to simultaneously send signals in two different MIMO modes or in different beam directions on one slot symbol.

Optionally, in some embodiments, at least two pieces of repeated control information are carried on the control channel. For example, the at least two pieces of control information are located, with same content and a same time-frequency resource size, on the time domain resource (the second time domain resource) occupied by the control channel. Sending repeated control information can improve coverage of the control information. Further, to ensure coverage of the control information, compared with a transmit power on each resource element (resource element, RE) on the data channel, a transmit power on each RE on the control channel can be increased by the first device by N/M times, where N is a frequency bandwidth of the data channel, and M is a frequency bandwidth of the control channel.

Optionally, the transmit parameter of the control channel and the transmit parameter of the data channel are notified through signaling, determined by the first device based on indication information related to unicast, multicast, or broadcast, or predefined.

Optionally, the method 500 further includes: performing, based on the second time domain resource, rate matching or puncturing on data carried on the data channel.

An operation of this step may be implemented by the modem processor 304 in the foregoing terminal device.

The operation of this step may be implemented by the processor 201 in the foregoing network device.

Step 503. Send the control information on the second time domain resource. It should be understood that the method 500 limits only the time domain resource of the control channel.

An operation of this step may be implemented by the transceiver 301 in the foregoing terminal device. Certainly, the operation of this step may also be implemented by the modem processor 304 in the foregoing terminal device by controlling the transceiver 301.

The operation of this step may be implemented by the transceiver 202 in the foregoing network device. Certainly, the operation of this step may also be implemented by the processor 201 in the foregoing network device by controlling the transceiver 202.

According to the method 500, the first device can determine the time domain relationship between the data channel and the control channel based on the transmit parameter of the data channel and the transmit parameter of the control channel, and can respectively determine different time domain multiplexing modes in different transmission cases, thereby more properly using time domain resources while ensuring transmission efficiency.

An embodiment of this application further provides another communication resource determining method 600. In the method 600, a first device may determine, based on a first parameter, a frequency domain resource occupied by a first channel. The following describes in detail the method 600 provided in this embodiment of this application.

Step 601. The first device obtains the first parameter. It should be understood that the description of the first device is the same as that described above, and details are not described herein again. The first parameter may be one parameter, or may be a plurality of parameters. This is not limited herein.

It should be understood that the first device in this embodiment of this application may be a terminal device, or may be a network device, or may be an apparatus that is in a terminal device or a network device and that performs the method in this embodiment of this application. A second device in this embodiment of this application may be a terminal device, or may be a network device, or may be an apparatus that is in a terminal device or a network device and that performs the method in this embodiment of this application. The second device may be a receive end device. For example, when the first device sends a control channel, the second device is a device that receives the control channel. When the first device sends a feedback channel, the second device is a device that receives the feedback channel, and the feedback channel carries feedback information that is based on data sent by the second device. In addition, the second device may be more than one device. In some cases, the second device may be a group of devices. This is not limited in this application.

In some embodiments, the first parameter includes an identifier related to a transmission link, and the transmission link herein is a link between the first device and the second device. Specifically, the identifier related to the transmission link may be an identifier of the first device, an identifier of the second device, a joint identifier of the first device and the second device, a radio network temporary identifier (radio network temporary identifier, RNTI) used when a network device schedules the first device, an RNTI used when a network device schedules the second device, or a hybrid automatic repeat request (hybrid automatic repeat request, HARQ) process number used by the first device and the second device. It should be understood that an RNTI used when the network device schedules a terminal device may be an RNTI specific to the terminal device, or may be an RNTI of a terminal device communication group or communication pair. For example, when the terminal device performs unicast, the RNTI may be an RNTI specific to a terminal device pair (pair); when the terminal device performs multicast, the RNTI may be an RNTI specific to a terminal device group (group). The first device may obtain an RNTI or related identifier from configuration information sent by the network device or control information sent by the network device. The identifier related to the first device may be determined by the first device, or may be configured by the network device. The identifier related to the second device may be obtained by the first device from information exchanged between the first device and the second device. Optionally, the second device may send the identifier related to the second device to the first device by using physical layer control information. Optionally, the HARQ process number used by the first device and the second device may be obtained by the first device or the second device from information configured by a base station. Alternatively, in some cases, a corresponding HARQ process number is associated with a specific slot. In this case, the first device may determine the HARQ process number based on a time domain location of a transmission resource. The joint identifier of the first device and the second device may be configured by the network device, or may be determined by the first device based on an identifier of the first device and an obtained identifier of the second device in a specific manner. For example, 4 bits may be extracted from the identifier of the first device, and 4 bits may be extracted from the identifier of the second device, to synthesize a joint identifier with a length of 8 bits.

Optionally, the first parameter may further include a subcarrier spacing. The subcarrier spacing may be predefined, may be configured by the network device by using a parameter related to a transmission resource, or may be pre-configured in the terminal device. This is not limited in the present invention.

Optionally, the first parameter may include a transmission mode in which the first device sends first data, and the transmission mode may be unicast, multicast, or broadcast. It should be understood that the first data is data carried on a data channel that is sent in the same sending occasion with the first channel at a physical layer.

Optionally, the first parameter may include a frequency bandwidth N of the first frequency domain resource and/or a frequency domain location of the first frequency domain resource. The first frequency domain resource is a frequency domain resource occupied by a first data channel. The first data channel is a data channel that is sent in the same sending occasion with the first channel at a physical layer. A manner in which the first device obtains the first frequency domain resource is described above, and details are not described herein again.

Optionally, when the first channel is a feedback channel, the feedback channel carries feedback information for second data sent by the second device. The method further includes: receiving second control information and the second data from the second device, where the second control information indicates a frequency domain resource occupied by the second data. Optionally, the second control information further includes indication information of a feedback resource. In this case, the first parameter may include any one or more of the following parameters 1 to 6:

1. Geographical location information of the first device, where for example, the geographical location information may be location coordinates obtained by the first device from a global positioning system (Global Positioning System, GPS), may be an identifier of a zone (zone) to which the first device belongs and that is obtained based on GPS coordinates, or may be location information that indirectly expresses GPS coordinates. When the first parameter includes the parameter 1 herein, the frequency domain resource used to send the first channel may be uniquely determined based on the location information of the first device, so that terminal devices at different locations have different transmission resources of the first channel, and transmission resources of the different terminal devices are orthogonal as much as possible, to reduce interference.

2. Scheduling information of a sidelink resource, where specifically, the scheduling information is scheduling information of a link resource between the first device and the second device. For example, the scheduling information may be resource scheduling information that is sent by the network device by using an RRC message, a SIB message, or a DCI message and that is used for sidelink transmission or for triggering sidelink transmission. Optionally, the scheduling information of the sidelink resource may be indication information that directly indicates a feedback resource, or may be information for implicitly indicating a feedback resource, by using a field in specific indication information, for example, a frequency domain resource indication field, a time domain resource indication field, and a modulation and coding scheme MCS indication field. Based on the scheduling information of the parameter 2, the network device can directly or indirectly control, by using signaling, the transmission resource of the feedback information sent by the first device.

3. Frequency domain resource occupied by the second data, where usually, the second device ensures sufficient orthogonality, of frequency domain resources occupied by the second data, between terminal devices by using a corresponding mechanism. Therefore, the frequency domain resource occupied by the second data is used to associate with a corresponding resource of feedback information, so that determined feedback resources are orthogonal to each other. In this way, overlapping and interference between frequency domain resources occupied by feedback information are reduced.

4. Frequency domain resource occupied by the second control information, where the second control information may be used to schedule the second data, and when the second data is scheduled, the second control information is in a one-to-one correspondence with the second data. Therefore, determining, based on the second control information, the frequency domain resource used to send the feedback information can also reduce overlapping and interference between the frequency domain resources occupied by the feedback information.

5. Indication information that is of a feedback resource and that is sent by the second device, where for example, a field in the second control information explicitly or implicitly indicates a frequency domain resource used to send the feedback channel. A field in the second control information explicitly or implicitly indicates a frequency domain resource used to send the feedback channel, for example, a frequency domain resource indication field, a time domain resource indication field, or a modulation and coding scheme MCS indication field.

6. Quantity of retransmissions of the second data or a quantity of slots occupied during data transmission of the second data, where the quantity of retransmissions or the quantity of slots may be indicated by the second control information. When data packets of the second data have different quantities of retransmissions or transmission slots, the first device determines, based on the quantity of retransmissions or transmission slots, frequency domain resources used to transmit the first channel, so that the frequency domain resources correspond to different feedback information. In addition, different quantities of retransmissions or transmission times usually correspond to different reliability of feedback information. Therefore, when feedback information with different reliability is transmitted on different frequency domain resources, transmission efficiency of the feedback information can be improved.

Optionally, the identifier related to the first device may be considered as a parameter specific to the first device. Optionally, the identifier related to the second device or an identifier related to a receiving device may be considered as a parameter common to the second device. Optionally, the parameters 1, 2, and 6 may be considered as parameters common to all devices. Optionally, the parameters 3, 4, and 5 may be considered as parameters specific to the second device. Optionally, when transmission between the first device and the second device is unicast transmission, each parameter is a terminal device-specific parameter. Optionally, when transmission between the first device and the second device is multicast transmission, each parameter is a parameter common to a terminal device group, and the terminal device group is a communication group including a plurality of terminal devices that perform multicast communication.

It should be understood that the first parameter may be one of the foregoing parameters, or the first parameter may include at least two of the foregoing parameters. When the frequency domain resource is determined based on a plurality of parameters, the first device may comprehensively determine, with reference to a plurality of different parameters, the frequency domain resource used to send the first channel. For example, the first device performs determining by using an identifier-related parameter, the parameter 4, the parameter 5, and the parameter 6 together. For another example, the first device performs determining based on the parameter 3 and the parameter 4 or the parameter 5, that is, performs determining by jointly using a location of a transmitter and a location of a frequency domain resource of a receiver.

For another example, the foregoing parameters are combined with the parameter 6, so that a double effect of randomizing interference and determining a frequency location can be achieved.

An operation of this step may be implemented by the transceiver 301 in the foregoing terminal device. Certainly, the operation of this step may also be implemented by the modem processor 304 in the foregoing terminal device by controlling the transceiver 301.

The operation of this step may be implemented by the transceiver 202 in the foregoing network device. Certainly, the operation of this step may also be implemented by the processor 201 in the foregoing network device by controlling the transceiver 202.

Step 602. The first device determines, based on the first parameter, the frequency domain resource used to send the first channel. As described above, the first channel may be a control channel, and the control channel carries control information. Alternatively, the first channel may be a feedback channel, and the feedback channel carries feedback information.

In some embodiments, step 602 may be specifically: determining, by the first device in a first frequency domain resource set based on the first parameter, the frequency domain resource used to send the first channel, where a frequency bandwidth of the first frequency domain resource set is L frequency domain units, and L is a positive integer. The first frequency domain resource set may be a frequency domain resource set occupied by a sidelink resource pool, or the first resource set may be a frequency domain resource set occupied by a control resource pool. The control resource pool is a resource pool dedicated to sending control information and/or feedback information. It should be understood that the resource pool represents a resource set obtained by combining a plurality of PRBs or sub-channels used for sidelink communication in a system. The resource pool may be indicated by the network device by using signaling, or may be pre-configured. In a resource set that is used to send or receive one or more types of information and that is defined in a resource pool, the terminal device may select a resource from the resource pool for side transmission.

In some embodiments, specifically, the first device determines, based on a correspondence between the first parameter and the frequency domain resource, the frequency domain resource used to send the first channel. Different values of the first parameter may correspond to different frequency domain resources, and the correspondence may be predefined. In a possible case, after obtaining the first parameter, the first device may obtain, through calculation based on a calculation manner defined in a standard, the frequency domain resource used to send the first channel. For example, the first device may obtain, through calculation, an index Y of a start frequency domain unit of the frequency domain resource used to send the first channel.

For example, when the first parameter is one of the foregoing parameters, the first parameter is set to a variable X, and Y may be calculated according to the following formula: Y = f(X) mod L, where f(X) represents a function of the variable X, mod represents a modulo operation, and L is the frequency bandwidth of the first frequency domain resource set. Optionally, the function f(X) may be any one of the following:

$$f(X) = X \tag{1}$$

$$f(X) = floor(X/Z) \tag{2}$$

$$f(X) = a*X+b \tag{3}$$

$$f(X) = (a*X+b)/Z \tag{4}$$

$$f(X) = floor((a*X+b)/Z) \tag{5}$$

a and b are real numbers, Z is a non-zero integer, and floor() represents a rounding-down operation. It should be understood that in this embodiment of this application, $\lfloor \rfloor$ and floor() represent a same calculation operation, and $\lceil \rceil$ and round() represent a same calculation operation.

It should be understood that in the foregoing calculation manner, Formula (1) indicates that no additional operation is performed on the first parameter, and a parameter corresponding to X is directly used to determine the frequency domain resource of the first channel through the modulo operation. Formula (2) indicates that a rounding-down operation is performed after scaling is performed based on an integer Z. Formula (3) indicates that linear transformation is performed by using a parameter corresponding to X, where an amplitude is a, and an offset value is b. Formula (4) is to scale a result of Formula (3) based on an amplitude of Z. Formula (5) indicates that a rounding-down operation is performed on a result of Formula (4).

For example, when the first parameter includes at least two of the foregoing parameters, the first parameter is set to a variable X. In this case, the variable X is a vector including a plurality of input parameters. The vector X includes at least two elements, and Y may be calculated according to the following formula: Y = f(g(X)) mod L, where g(X) represents a function of at least two elements in the vector X. The function g(X) is set to a variable, and Y may be calculated according to the following formula: Y = f(g(X)) mod L, where f(g(X)) represents a function of a variable g(X), mod represents a modulo operation, and L is the frequency bandwidth of the first frequency domain resource set. Optionally, the function f(g(X)) may be any one of the following:

$$f(g(X)) = g(X) \tag{6}$$

$$f(g(X)) = floor(g(X)/Z) \tag{7}$$

$$f(g(X)) = a*g(X)+b \tag{8}$$

$$f(g(X)) = (a*g(X)+b)/Z \tag{9}$$

$$f(g(X)) = floor((a*g(X)+b)/Z) \tag{10}$$

a and b are real numbers, Z is a non-zero integer, and floor() represents a rounding-down operation. In Formula (6) to Formula (10), only x is replaced with g(x), and other meanings of the calculation manner are the same as those of Formula (1) to Formula (5). This is not repeated herein.

It should be understood that when the first parameter is set to a variable, a value of all bits in the first parameter may be used as the variable, or a value of some bits in the first parameter may be used as the variable. For example, the first parameter is an identifier related to a transmission link. It is assumed that a value of all bits of the identifier is 40. During calculation, X = 40 may be directly used. A calculated start frequency domain unit of the feedback channel is 40 mod L. For example, if L = 25, a corresponding start frequency domain unit is a PRB numbered 15. When some bits of the identifier are used, for example, when a value of all bits of the identifier is 57, a corresponding binary number is 111001, and some values or bits in the binary number may be used. For example, the lower four bits are used, that is, 1001 = 9. For example, the higher four bits are used, that is, 1110 = 14. Alternatively, other bits may be used. This is not limited herein.

An operation of this step may be implemented by the modem processor 304 in the foregoing terminal device.

The operation of this step may be implemented by the processor 201 in the foregoing network device.

Step 603. The first device sends the first channel to the second device on the frequency domain resource determined in step 602.

It should be understood that in the method 600, only the frequency domain resource of the first channel is limited. In an actual sending process, the first device further needs time domain resource information of the first channel. The time domain resource information may be predefined in a standard, may be indicated by the network device or another terminal device by using signaling, or may be obtained by using a combination of the foregoing two manners. For example, a quantity of time domain symbols occupied by the first channel is predefined, and a time domain location of the first channel relative to the data channel is indicated by using signaling.

It should be noted that the first device in this embodiment of this application may be a terminal device, or may be a network device, or may be an apparatus that is in a terminal device or a network device and that performs the method in this embodiment of this application. The foregoing description is also applicable to the second device.

An operation of this step may be implemented by the transceiver 301 in the foregoing terminal device. Certainly, the operation of this step may also be implemented by the modem processor 304 in the foregoing terminal device by controlling the transceiver 301.

The operation of this step may be implemented by the transceiver 202 in the foregoing network device. Certainly, the operation of this step may also be implemented by the processor 201 in the foregoing network device by controlling the transceiver 202.

The method 600 may be used to determine the frequency domain resource occupied by the first channel. In an actual sending process, the first device further needs time domain resource information of the first channel. The time domain resource information may be predefined in a standard, may be indicated by the network device or another terminal device by using signaling, or may be obtained by using a combination of the foregoing two manners, and therefore may be used to determine a complete time-frequency resource occupied by the first channel. The first device determines the frequency domain resource of the first channel based on the first parameter by using the foregoing method, so that locations of different frequency domain resources of the first channel can be correspondingly obtained based on different first parameters. This reduces interference caused by overlap of frequency domain resources used by different devices to send the first channel, and improves transmission performance.

An example of the present invention further provides an apparatus (for example, an integrated circuit, a wireless device, or a circuit module), configured to implement the foregoing methods. The communication resource determining apparatus described in this specification may be an independent device or may be a part of a larger device. The device may be: (i) an independent IC; (ii) a set of one or more Ics, where the set may include a memory IC configured to store data and/or an instruction; (iii) an RFIC such as an RF receiver or an RF transmitter/receiver; (iv) an ASIC such as a mobile station modem; (v) a module that can be embedded in another device; (vi) a receiver, a cellular phone, a wireless device, a hand-held phone, or a mobile unit; or (vii) others.

The methods and the apparatuses provided in the embodiments of the present invention may be applied to a terminal device or a network device (which may be collectively referred to as a wireless device). The terminal device or the network device or the wireless device may include a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant messaging software. In addition, in the embodiments of the present invention, a specific structure of an execution body of the method is not limited in the embodiments of the present invention, provided that the execution body can perform communication according to the communication resource determining method in the embodiments of the present invention by running a program that records code of the method in the embodiments of the present invention. For example, the execution body of the communication resource determining method in the embodiments of the present invention may be the terminal device or the network device, or a function module that is in the terminal device or the network device and that can invoke and execute a program.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the embodiments of the present invention.

In addition, aspects or features in the embodiments of the present invention may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD), or a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry an instruction and/or data.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the various embodiments of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

When the functions are implemented in the form of a software function unit and sold or used as an independent product, the functions may be stored in a computer-readable storage medium. Based on such an understanding, the technical solutions of the embodiments of the present invention essentially, or the part contributing to the current technology, or some of the technical solutions may be implemented in a form of a software product. The software product is stored in a storage medium, and includes several instructions for instructing a computer device (which may be a personal computer, a server, or an access network device) to perform all or some of the steps of the methods described in all of the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

**Claims**

1. A communication resource determining method, applied to a first device, comprising:

determining a first frequency domain resource, wherein the first frequency domain resource is a frequency domain resource occupied by a data channel, and a frequency bandwidth of the first frequency domain resource is N frequency domain units;
determining a second frequency domain resource based on the frequency bandwidth of a first channel and the first frequency domain resource, wherein the frequency bandwidth of the first channel is M frequency domain units, the second frequency domain resource is a frequency domain resource occupied by the first channel, and the second frequency domain resource is a subset of the first frequency domain resource, wherein M ≤ N, and M and N are positive integers; and
sending the first channel on the second frequency domain resource, wherein
the first channel is a control channel; or the first channel is a feedback channel;
wherein that the second frequency domain resource is determined based on the frequency bandwidth of the first channel and the first frequency domain resource comprises:

a boundary of the second frequency domain resource is located within a boundary of the first frequency domain resource when M < N;
wherein that a boundary of the second frequency domain resource is located within a boundary of the first frequency domain resource comprises:

a frequency bandwidth from the frequency domain start point of the second frequency domain resource to the frequency domain start point of the first frequency domain resource is

$$\lfloor (N-M)/2 \rfloor$$

or

$$\lceil (N-M)/2 \rceil$$ frequency domain units; or

a frequency bandwidth from the frequency domain end point of the second frequency domain resource to the frequency domain end point of the first frequency domain resource is

$$\lfloor (N-M)/2 \rfloor$$ or

$$\lceil (N-M)/2 \rceil$$ frequency domain units,
and, wherein a transmit parameter of the control channel is different from a transmit parameter of the data channel, and the transmit parameter comprises at least one of the following parameters: an antenna port number, a multiple-input multiple-output MIMO transmission mode, or quasi co-location QCL indication information, wherein the MIMO transmission mode is one of the following: beamforming, spatial multiplexing, or transmit diversity.

2. The method according to claim 1, wherein the frequency domain unit is a physical resource block, PRB, or the frequency domain unit is a sub-channel.

3. The method according to claim 2, wherein a frequency domain size of the sub-channel is predefined, or is semi-statically configured by the network device through higher layer signaling.

4. The method according to claim 2 or 3, wherein a sub-channel size corresponding to the data channel is different from a sub-channel size corresponding to the control channel, and a set of sub-channel sizes corresponding to the data channel and a set of sub-channel sizes corresponding to the control channel are independently configured in sidelink communications.

5. A communication resource determining apparatus, comprising a processor (201), a memory (203), and a transceiver (202), wherein

the processor is configured to determine a first frequency domain resource, wherein the first frequency domain resource is a frequency domain resource occupied by a data channel, and a frequency bandwidth of the first frequency domain resource is N frequency domain units;
the processor is configured to determine a second frequency domain resource based on the frequency bandwidth of a first channel and the first frequency domain resource, wherein the frequency bandwidth of the first channel is M frequency domain units, and the second frequency domain resource is a frequency domain resource occupied by the first channel, wherein the second frequency domain resource is a subset of the first frequency domain resource, M ≤ N, and M and N are positive integers; and the transceiver is configured to send the first channel on the second frequency domain resource, wherein

the first channel is a control channel; or the first channel is a feedback channel;

wherein that the processor determines a second frequency domain resource based on a frequency bandwidth of a first channel and the first frequency domain resource comprises:

a boundary of the second frequency domain resource is located within a boundary of the first frequency domain resource when M < N;

wherein that a boundary of the second frequency domain resource is located within a boundary of the first frequency domain resource comprises:

a frequency bandwidth from the frequency domain start point of the second frequency domain resource to the frequency domain start point of the first frequency domain resource is

$$\left\lfloor (N-M)/2 \right\rfloor$$

or

$$\left\lceil (N-M)/2 \right\rceil$$

frequency domain units; or

a frequency bandwidth from the frequency domain end point of the second frequency domain resource to the frequency domain end point of the first frequency domain resource is

$$\left\lfloor (N-M)/2 \right\rfloor$$

or

$$\left\lceil (N-M)/2 \right\rceil$$

frequency domain units, and, wherein a transmit parameter of the control channel is different from a transmit parameter of the data channel, and the transmit parameter comprises at least one of the following parameters: an antenna port number, a multiple-input multiple-output MIMO transmission mode, or quasi co-location QCL indication information, wherein the MIMO transmission mode is one of the following: beamforming, spatial multiplexing, or transmit diversity.

6. The apparatus according to claim 5, wherein the frequency domain unit is a physical resource block, PRB, or the frequency domain unit is a sub-channel.

7. The method according to claim 6, wherein a frequency domain size of the sub-channel is predefined, or is semi-statically configured by the network device through higher layer signaling.

8. The method according to claim 6 or 7, wherein a sub-channel size corresponding to the data channel is different from a sub-channel size corresponding to the control channel, and a set of sub-channel sizes corresponding to the data channel and a set of sub-channel sizes corresponding to the control channel are independently configured in sidelink communications.

9. A computer program product comprising instructions, wherein when when executed by a computer, the computer is enabled to perform the method according to any one of claims 1 to 4.

**Patentansprüche**

1. Kommunikationsressourcenfestlegungsverfahren, das auf eine erste Einrichtung angewandt wird, umfassend:

Festlegen einer ersten Frequenzdomänenressource, wobei die erste Frequenzdomänenressource eine Frequenzdomänenressource ist, die durch einen Datenkanal belegt wird, und eine Frequenzbandbreite der ersten Frequenzdomänenressource N Frequenzdomäneneinheiten beträgt;

Festlegen einer zweiten Frequenzdomänenressource basierend auf der Frequenzbandbreite eines ersten Kanals und der ersten Frequenzdomänenressource, wobei die Frequenzbandbreite des ersten Kanals M Frequenzdomäneneinheiten beträgt, die zweite Frequenzdomänenressource eine Frequenzdomänenressource ist, die durch den ersten Kanal belegt wird, und die zweite Frequenzdomänenressource ein Teilsatz der ersten Frequenzdomänenressource ist, wobei M ≤ N und M und N positive Ganzzahlen sind; und

Senden des ersten Kanals auf der zweiten Frequenzdomänenressource, wobei

der erste Kanal ein Steuerkanal ist; oder der erste Kanal ein Rückmeldungskanal ist;

wobei, dass die zweite Frequenzdomänenressource basierend auf der Frequenzbandbreite des ersten Kanals und der ersten Frequenzdomänenressource festgelegt wird, Folgendes umfasst:

eine Grenze der zweiten Frequenzdomänenressource befindet sich innerhalb einer Grenze der ersten Frequenzdomänenressource, wenn M < N;
wobei, dass sich eine Grenze der zweiten Frequenzdomänenressource innerhalb einer Grenze der ersten Frequenzdomänenressource befindet, Folgendes umfasst:

eine Frequenzbandbreite von dem Frequenzdomänenstartpunkt der zweiten Frequenzdomänenressource bis zu dem Frequenzdomänenstartpunkt der ersten Frequenzdomänenressource beträgt $\lfloor (N-M)/2 \rfloor$ oder $\lceil (N-M)/2 \rceil$ Frequenzdomäneneinheiten; oder
eine Frequenzbandbreite von dem Frequenzdomänenendpunkt der zweiten Frequenzdomänenressource bis zu dem Frequenzdomänenendpunkt der ersten Frequenzdomänenressource beträgt $\lfloor (N-M)/2 \rfloor$ oder $\lceil (N-M)/2 \rceil$ Frequenzdomäneneinheiten,
und wobei sich ein Übertragungsparameter des Steuerkanals von einem Übertragungsparameter des Datenkanals unterscheidet und der Übertragungsparameter mindestens einen der folgenden Parameter umfasst: einer Antennenanschlussnummer, eines Multiple-Input-Multiple-Output-Übertragungsmodus, MIMO-Übertragungsmodus, oder Quasi-Colocation-Anzeigeinformationen, QCL-Anzeigeinformationen, wobei der MIMO-Übertragungsmodus eines von Folgendem ist: einer Strahlbildung, einem räumlichen Multiplexing oder einer Übertragungsdiversität.

2. Verfahren nach Anspruch 1, wobei die Frequenzdomäneneinheit ein physikalischer Ressourcenblock, PRB, ist oder die Frequenzdomäneneinheit ein Teilkanal ist.

3. Verfahren nach Anspruch 2, wobei eine Frequenzdomänengröße des Teilkanals vordefiniert wird oder durch die Netzeinrichtung über eine Signalisierung auf höherer Ebene halbstatisch konfiguriert wird.

4. Verfahren nach Anspruch 2 oder 3, wobei sich eine Teilkanalgröße, die dem Datenkanal entspricht, von einer Teilkanalgröße, die dem Steuerkanal entspricht, unterscheidet und ein Satz von Teilkanalgrößen, der dem Datenkanal entspricht, und ein Satz von Teilkanalgrößen, der dem Steuerkanal entspricht, in Sidelink-Kommunikationen unabhängig konfiguriert werden.

5. Kommunikationsressourcenfestlegungsvorrichtung, umfassend einen Prozessor (201), einen Speicher (203) und einen Sendeempfänger (202), wobei

der Prozessor dazu konfiguriert ist, eine erste Frequenzdomänenressource festzulegen, wobei die erste Frequenzdomänenressource eine Frequenzdomänenressource ist, die durch einen Datenkanal belegt wird, und eine Frequenzbandbreite der ersten Frequenzdomänenressource N Frequenzdomäneneinheiten beträgt;
der Prozessor dazu konfiguriert ist, eine zweite Frequenzdomänenressource basierend auf der Frequenzbandbreite eines ersten Kanals und der ersten Frequenzdomänenressource festzulegen, wobei die Frequenzbandbreite des ersten Kanals M Frequenzdomäneneinheiten beträgt und die zweite Frequenzdomänenressource eine Frequenzdomänenressource ist, die durch den ersten Kanal belegt wird, wobei die zweite Frequenzdomänenressource ein Teilsatz der ersten Frequenzdomänenressource ist, M ≤ N und M und N positive Ganzzahlen sind; und
der Sendeempfänger dazu konfiguriert ist, den ersten Kanal auf der zweiten Frequenzdomänenressource zu senden, wobei
der erste Kanal ein Steuerkanal ist; oder der erste Kanal ein Rückmeldungskanal ist;
wobei, dass der Prozessor eine zweite Frequenzdomänenressource basierend auf einer Frequenzbandbreite eines ersten Kanals und der ersten Frequenzdomänenressource festlegt, Folgendes umfasst:

eine Grenze der zweiten Frequenzdomänenressource befindet sich innerhalb einer Grenze der ersten Frequenzdomänenressource, wenn M < N;
wobei, dass sich eine Grenze der zweiten Frequenzdomänenressource innerhalb einer Grenze der ersten Frequenzdomänenressource befindet, Folgendes umfasst:
eine Frequenzbandbreite von dem Frequenzdomänenstartpunkt der zweiten Frequenzdomänenressource bis zu dem Frequenzdomänenstartpunkt der ersten Frequenzdomänenressource beträgt

$$\lfloor (N - M)/2 \rfloor \text{ oder } \lceil (N - M)/2 \rceil$$

Frequenzdomäneneinheiten; oder
eine Frequenzbandbreite von dem Frequenzdomänenendpunkt der zweiten Frequenzdomänenressource bis zu dem Frequenzdomänenendpunkt der ersten Frequenzdomänenressource beträgt

$$\lfloor (N - M)/2 \rfloor \qquad \text{oder}$$

$\lceil (N - M)/2 \rceil$ Frequenzdomäneneinheiten, und wobei sich ein Übertragungsparameter des Steuerkanals von einem Übertragungsparameter des Datenkanals unterscheidet und der Übertragungsparameter mindestens einen der folgenden Parameter umfasst: einer Antennenanschlussnummer, eines Multiple-Input-Multiple-Output-Übertragungsmodus, MIMO-Übertragungsmodus, oder Quasi-Colocation-Anzeigeinformationen, QCL-Anzeigeinformationen, wobei der MIMO-Übertragungsmodus eines von Folgendem ist: einer Strahlbildung, einem räumlichen Multiplexing oder einer Übertragungsdiversität.

6. Vorrichtung nach Anspruch 5, wobei die Frequenzdomäneneinheit ein physikalischer Ressourcenblock, PRB, ist oder die Frequenzdomäneneinheit ein Teilkanal ist.

7. Verfahren nach Anspruch 6, wobei eine Frequenzdomänengröße des Teilkanals vordefiniert wird oder durch die Netzeinrichtung über eine Signalisierung auf höherer Ebene halbstatisch konfiguriert wird.

8. Verfahren nach Anspruch 6 oder 7, wobei sich eine Teilkanalgröße, die dem Datenkanal entspricht, von einer Teilkanalgröße, die dem Steuerkanal entspricht, unterscheidet und ein Satz von Teilkanalgrößen, der dem Datenkanal entspricht, und ein Satz von Teilkanalgrößen, der dem Steuerkanal entspricht, in Sidelink-Kommunikationen unabhängig konfiguriert werden.

9. Computerprogrammprodukt, umfassend Anweisungen, wobei, wenn sie durch einen Computer ausgeführt werden, es dem Computer ermöglicht wird, das Verfahren nach einem der Ansprüche 1 bis 4 durchzuführen.

**Revendications**

1. Procédé de détermination d'une ressource de communication, appliqué à un premier dispositif, comprenant :

la détermination d'une première ressource de domaine fréquentiel, dans lequel la première ressource de domaine fréquentiel est une ressource de domaine fréquentiel occupée par un canal de données, et une bande passante fréquentielle de la première ressource de domaine fréquentiel est de N unités de domaine fréquentiel ;
la détermination d'une seconde ressource de domaine fréquentiel sur la base de la bande passante fréquentielle d'un premier canal et de la première ressource de domaine fréquentiel, dans lequel la bande passante fréquentielle du premier canal est de M unités de domaine fréquentiel, la seconde ressource de domaine fréquentiel est une ressource de domaine fréquentiel occupée par le premier canal, et la seconde ressource de domaine fréquentiel est un sous-ensemble de la première ressource de domaine fréquentiel, dans lequel $M \leq N$, et M et N sont des entiers positifs ; et
l'envoi du premier canal sur la seconde ressource de domaine fréquentiel, dans lequel
le premier canal est un canal de commande ; ou
le premier canal est un canal de rétroaction ;
dans lequel la seconde ressource de domaine fréquentiel est déterminée sur la base de la bande passante fréquentielle du premier canal et la première ressource de domaine fréquentiel comprend :

une limite de la seconde ressource de domaine fréquentiel est située à l'intérieur d'une limite de la première ressource de domaine fréquentiel lorsque M < N ;
dans lequel le fait qu'une limite de la seconde ressource de domaine fréquentiel soit située à l'intérieur d'une limite de la première ressource de domaine fréquentiel comprend :

une bande passante fréquentielle du point de départ du domaine fréquentiel de la seconde ressource de domaine fréquentiel au point de départ du domaine fréquentiel de la première ressource de domaine fréquentiel est de

$$\lfloor (N - M)/2 \rfloor \qquad \text{ou}$$

$\lceil (N - M)/2 \rceil$ unités de domaine fréquentiel ; ou
une bande passante fréquentielle du point de fin du domaine fréquentiel de la seconde ressource de domaine fréquentiel au point de fin du domaine fréquentiel de la première ressource de domaine fréquentiel est de

$$\lfloor (N - M)/2 \rfloor \quad \text{ou}$$

$$\lceil (N - M)/2 \rceil \quad \text{unités de domaine}$$

fréquentiel,
et, dans lequel un paramètre de transmission du canal de commande est différent d'un paramètre de transmission du canal de données, et le paramètre de transmission comprend au moins l'un des paramètres suivants : un numéro de port d'antenne, un mode de transmission à entrées multiples et sorties multiples, MIMO, ou des informations d'indication de quasi-colocalisation, QCL, dans lequel le mode de transmission MIMO est l'un des suivants : une formation de faisceau, un multiplexage spatial, ou une diversité de transmission.

2. Procédé selon la revendication 1, dans lequel l'unité de domaine fréquentiel est un bloc de ressources physiques, PRB, ou l'unité de domaine fréquentiel est un sous-canal.

3. Procédé selon la revendication 2, dans lequel une taille de domaine fréquentiel du sous-canal est prédéfinie, ou est configurée de manière semi-statique par le dispositif de réseau via une signalisation de couche supérieure.

4. Procédé selon la revendication 2 ou 3, dans lequel une taille de sous-canal correspondant au canal de données est différente d'une taille de sous-canal correspondant au canal de commande, et un ensemble de tailles de sous-canal correspondant au canal de données et un ensemble de tailles de sous-canal correspondant au canal de commande sont configurés indépendamment dans les communications de liaison latérale.

5. Appareil de détermination d'une ressource de communication, comprenant un processeur (201), une mémoire (202), et un émetteur-récepteur (203), dans lequel

le processeur est configuré pour déterminer une première ressource de domaine fréquentiel, dans lequel la première ressource de domaine fréquentiel est une ressource de domaine fréquentiel occupée par un canal de données, et une bande passante fréquentielle de la première ressource de domaine fréquentiel est de N unités de domaine fréquentiel ;
le processeur est configuré pour déterminer une seconde ressource de domaine fréquentiel sur la base de la bande passante fréquentielle d'un premier canal et de la première ressource de domaine fréquentiel, dans lequel la bande passante fréquentielle du premier canal est de M unités de domaine fréquentiel, et la seconde ressource de domaine fréquentiel est une ressource de domaine fréquentiel occupée par le premier canal, dans lequel la seconde ressource de domaine fréquentiel est un sous-ensemble de la première ressource de domaine fréquentiel, M ≤ N, et M et N sont des entiers positifs ; et
l'émetteur-récepteur est configuré pour envoyer le premier canal sur la seconde ressource de domaine fréquentiel, dans lequel
le premier canal est un canal de commande ; ou
le premier canal est un canal de rétroaction ;
dans lequel le fait que le processeur détermine une seconde ressource de domaine fréquentiel sur la base d'une bande passante fréquentielle d'un premier canal et la première ressource de domaine fréquentiel comprend :

une limite de la seconde ressource de domaine fréquentiel est située à l'intérieur d'une limite de la première ressource de domaine fréquentiel lorsque M < N ;
dans lequel le fait qu'une limite de la seconde ressource de domaine fréquentiel soit située à l'intérieur d'une limite de la première ressource de domaine fréquentiel comprend :

une bande passante fréquentielle du point de départ du domaine fréquentiel de la seconde ressource de domaine fréquentiel au point de départ du domaine fréquentiel de la première ressource de domaine fréquentiel est de

$$\lfloor (N - M)/2 \rfloor \quad \text{ou}$$

$$\lceil (N - M)/2 \rceil \quad \text{unités de domaine}$$

fréquentiel ; ou
une bande passante fréquentielle du point de fin de domaine fréquentiel de la seconde ressource de domaine fréquentiel au point de fin de domaine fréquentiel de la première ressource de domaine fréquentiel est

$$\lfloor (N - M)/2 \rfloor \quad \text{ou}$$

$$\lceil (N - M)/2 \rceil \quad \text{unités de domaine}$$

fréquentiel, et, dans lequel un paramètre de transmission du canal de commande est différent d'un paramètre de transmission du canal de données, et le paramètre de transmission comprend au moins l'un des paramètres suivants : un numéro de port d'antenne, un mode de transmission à entrées multiples et sorties multiples, MIMO, ou des informations d'indication de quasi-colocalisation, QCL, dans lequel le mode de transmission MIMO est l'un des suivants : une formation de faisceau, un multiplexage spatial, ou une diversité de transmission.

6. Appareil selon la revendication 5, dans lequel l'unité de domaine fréquentiel est un bloc de ressources physiques, PRB, ou l'unité de domaine fréquentiel est un sous-canal.

7. Procédé selon la revendication 6, dans lequel une taille de domaine fréquentiel du sous-canal est prédéfinie, ou est configurée de manière semi-statique par le dispositif de réseau via une signalisation de couche supérieure.

8. Procédé selon la revendication 6 ou 7, dans lequel une taille de sous-canal correspondant au canal de données est différente d'une taille de sous-canal correspondant au canal de commande, et un ensemble de tailles de sous-canal correspondant au canal de données et un ensemble de tailles de sous-canal correspondant au canal de commande sont configurés indépendamment dans des communications de liaison latérale.

9. Produit de programme informatique comprenant des instructions, dans lequel lorsque lorsqu'elles sont exécutées par un ordinateur, l'ordinateur est activé pour réaliser le procédé selon l'une quelconque des revendications 1 à 4.

FIG. 1

FIG. 2

FIG. 3

```
┌─────────────────┐                              ┌──────────────────┐
│   First device  │                              │  Second device   │
└────────┬────────┘                              └─────────┬────────┘
         │                                                 │
┌────────┴──────────────────────┐                          │
│ 401. Determine a first        │                          │
│ frequency domain resource,    │                          │
│ where the first frequency     │                          │
│ domain resource is a          │                          │
│ frequency domain resource     │                          │
│ occupied by a data channel,   │                          │
│ and a frequency bandwidth of  │                          │
│ the first frequency domain    │                          │
│ resource is N frequency       │                          │
│ domain resources              │                          │
└────────┬──────────────────────┘                          │
┌────────┴──────────────────────┐                          │
│ 402. Determine a second       │                          │
│ frequency domain resource     │                          │
│ based on a frequency          │                          │
│ bandwidth M of a first        │                          │
│ channel and the first         │                          │
│ frequency domain resource,    │                          │
│ where the second frequency    │                          │
│ domain resource is a subset   │                          │
│ of the first frequency domain │                          │
│ resource, where M≤N, and M    │                          │
│ and N are positive integers   │                          │
└────────┬──────────────────────┘                          │
         │     403. Send the first channel on the          │
         │────── second frequency domain resource ────────▶│
         │                                                  │
         │                              ┌───────────────────┴───────┐
         │                              │ 404. Detect a control     │
         │                              │ channel, where control    │
         │                              │ information carried on    │
         │                              │ the control channel       │
         │                              │ indicates the frequency   │
         │                              │ bandwidth N of the data   │
         │                              │ channel                   │
         │                              └───────────────────┬───────┘
         │                              ┌───────────────────┴───────┐
         │                              │ 405. Determine the first  │
         │                              │ frequency domain resource │
         │                              │ based on a frequency      │
         │                              │ domain resource occupied  │
         │                              │ by the control channel    │
         │                              │ and the frequency         │
         │                              │ bandwidth N of the data   │
         │                              │ channel                   │
         │                              └───────────────────┬───────┘
         │                                                  │
```

FIG. 4

FIG. 5

FIG. 6

FIG. 7

(a)                                                    (b)

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MEDIATEK INC**. Discussion on physical layer structure for NR sidelink. *3GPP DRAFT; R1-1812364, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE*, 03 November 2018, 1-10

- **VIVO**. Physical layer structure for NR sidelink. *3GPP DRAFT; R1-1812306, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE*, 03 November 2018, 1-11